# EUROPEAN PATENT APPLICATION

(11) **EP 4 726 484 A1**
(43) Date of publication of application: **15.04.2026**
(21) Application number: 25778062.7
(22) Date of filing: 19.03.2025
(51) Int. Cl.: G05B 19/042

(54) **METHOD FOR PERFORMING DEVICE CONTROL ON BASIS OF SPEECH INTERACTION, AND DEVICE**

(30) Priority: 25.03.2024 CN 202410350616
(71) Applicant: Huawei Technologies Co., Ltd., Shenzhen, Guangdong 518129 (CN)
(72) Inventor: WU, Wenhao, Shenzhen, Guangdong 518129 (CN); XU, Qiang, Shenzhen, Guangdong 518129 (CN); YOUSEFI REZAII, Tohid, Shenzhen, Guangdong 518129 (CN); LI, Chenhe, Shenzhen, Guangdong 518129 (CN); LI, Jun, Shenzhen, Guangdong 518129 (CN); WANG, Lei, Shenzhen, Guangdong 518129 (CN); CHEN, Liwen, Shenzhen, Guangdong 518129 (CN)
(74) Representative: Grünecker Patent- und Rechtsanwälte PartG mbB
(86) International application number: PCT/CN2025/083462
(87) International publication number: WO 2025/201141

(57) **Abstract**

A voice interaction-based device control method is provided. The method may be applied to a voice receiving device (110). The method includes: receiving a voice instruction of a user (210); determining a target area space (220) and a control instruction (240) based on a target location in the voice instruction or indication information indicating an area space in the voice instruction; sending, to a controlling device, area space information indicating the target area space and the voice instruction (230); receiving an execution result sent by the controlling device (290), where the execution result is a result of executing the voice instruction by a controlled device; and providing feedback information based on the execution result (295). According to the method, when the user performs voice interaction with a home device, a home device in a specific area space that the user wants to control can be controlled by using a simple voice instruction.

## Description

This application claims priority to Chinese Patent Application No. 202410350616.5, filed with the China National Intellectual Property Administration on March 25, 2024 and entitled "VOICE INTERACTION-BASED DEVICE CONTROL METHOD AND DEVICE", which is incorporated herein by reference in its entirety.

### TECHNICAL FIELD

This application relates to the smart home field, and more specifically, to a voice interaction-based device control method and a device.

### BACKGROUND

In a house-wide smart scenario, a user may control a home device by performing voice interaction with a smart device. For example, the user may perform voice interaction with a smart speaker, to implement a requirement of controlling the home device.

However, when performing voice interaction with the smart device, the user needs to accurately say a name of the home device to control the home device. For control on a home device in a specific area in an entire house, a current voice interaction manner cannot meet this requirement of the user.

### SUMMARY

This application provides a voice interaction-based device control method and a device, to conveniently control a home device in a specific area space.

According to a first aspect, this application provides a voice interaction-based device control method, applied to a voice receiving device, including: The voice receiving device receives a voice instruction of a user. The voice receiving device determines a target area space based on a target location in the voice instruction or indication information indicating an area space in the voice instruction, where the target area space is an area space in which a controlled device is located, and there is a correspondence between the target area space and the controlled device. The voice receiving device sends, to a controlling device, area space information indicating the target area space and the voice instruction. The voice receiving device receives an execution result sent by the controlling device, where the execution result is a result of executing the voice instruction by the controlled device. The voice receiving device provides feedback information based on the execution result. Based on this embodiment of this application, the voice receiving device may parse the voice instruction of the user, obtain the target area space that the user wants to control, and send the target area space and the voice instruction of the user to the controlling device, to control the corresponding controlled device. In this way, when the user performs voice interaction with a home device, a home device in a specific area space that the user wants to control may be controlled by using a simple voice instruction, to improve voice interaction efficiency.

For example, the voice instruction of the user may directly include a target location, for example, here, my location, or a wall side. The voice instruction may further include the indication information indicating the area space, for example, a living room, a main bedroom, or a sofa.

In an implementation, that the voice receiving device provides the feedback information based on the execution result includes: when a location of the user and the controlled device are in a same area space, the voice receiving device provides the feedback information based on the execution result in a visual manner and/or a prompt sound effect manner. When a location of the user and the controlled device are in different area spaces, the voice receiving device provides the feedback information based on the execution result in a manner of indicating the execution result by using a voice instruction. Based on this embodiment of this application, when the location of the user and the controlled device are in the same area space, because the user can intuitively perceive the execution result of the controlled device, the voice receiving device provides the feedback information for the user in the visual effect and/or the prompt sound effect manner, to avoid causing additional interference to the user. When the location of the user and the voice receiving device are not in the same area space, the voice receiving device may output the execution result by using a voice, to help the user obtain the result of executing the voice instruction by the home device.

In an implementation, that the voice receiving device determines the target area space based on the target location in the voice instruction includes: determining the location of the user based on the voice instruction, and determining an area space corresponding to the location of the user as the target area space. Based on this embodiment of this application, if the voice instruction is "turn on the light here", the voice receiving device may determine the location of the user, and determine the area space corresponding to the location of the user as the target area space. In this way, the user does not need to accurately say an area space in which the home device that needs to be controlled is located, and can conveniently control home devices in some area spaces by using only a simple voice instruction, to improve voice interaction efficiency.

In an implementation, that the voice receiving device determines the target area space based on the target location in the voice instruction includes: The voice receiving device determines that the voice instruction does not include the indication information, and determines a first area space corresponding to the target location as the target area space, where the first area space includes one or more area subspaces. In this way, the user does not need to accurately say an area space in which the home device that needs to be controlled is located, and can conveniently control home devices in some area spaces by using only a simple voice instruction, to improve voice interaction efficiency.

For example, the voice instruction is "turn on the light here", and here may correspond to a living room area. The living room area may include a plurality of area subspaces such as a sofa and a television cabinet. In this case, the voice receiving device may use the entire living room area as the target area space.

In an implementation, that the voice receiving device determines the target area space based on the indication information indicating the area space in the voice instruction includes: determining that the voice instruction includes the indication information, and determining the area space indicated by the indication information as the target area space. Based on this embodiment of this application, when the voice instruction of the user includes the indication information indicating the area space, the voice receiving device may determine that the target area space is the area space indicated by the indication information. In this way, the voice receiving device can determine needed devices in specific area spaces, to improve voice interaction efficiency.

For example, if the voice instruction is "turn on the light in the main bedroom", the indication information is the main bedroom.

In an implementation, that the voice receiving device determines the target area space based on the indication information indicating the area space in the voice instruction includes: determining a target area subspace in a plurality of area subspaces in the area space based on the indication information; and determining the target area subspace as the target area space. Based on this embodiment of this application, the home device in the area space that the user wants to control may be controlled.

For example, the living room area includes a plurality of area subspaces such as a sofa area, a television cabinet area, and a wall side area. If the voice instruction is "turn on the light in the sofa area", the indication information is the sofa area. In this case, the voice receiving device may use the sofa area as the target area space.

In an implementation, that the voice receiving device determines the target area space based on the indication information indicating the area space in the voice instruction includes: determining that the indication information indicates a plurality of area spaces. The voice receiving device determines the location of the user. The voice receiving device determines an area space corresponding to the location of the user as the target area space, where the area space corresponding to the target location is one of the plurality of area spaces. Based on this embodiment of this application, when the indication information in the voice instruction indicates the plurality of area spaces, the voice receiving device may further determine the location of the user, and determine, as the target area space, the area space to which the location of the user belongs. In this way, although the voice instruction of the user is simple, the home device in the area space that the user wants to control may still be controlled.

For example, the location of the user may be determined by the voice receiving device based on the voice instruction, for example, sound source positioning is performed to determine the location of the user, or the location of the user may be received by the voice receiving device from another device, for example, from a camera or from the controlling device.

For example, if the voice instruction is "turn on the light on the wall side", the indication information is the wall side, or location information is the wall side. However, an entire house of the user includes a plurality of area spaces, and each area space may have a wall side. Therefore, the indication information may indicate the plurality of area spaces.

In an implementation, that the voice receiving device determines the target area space based on the target location in the voice instruction includes: The voice receiving device determines a movement trajectory of the user based on the voice instruction, where the movement trajectory includes a start point and an end point. When a control instruction in the voice instruction is used to turn on the controlled device, the voice receiving device determines that the target area space is an area space in which the end point is located. When a control instruction in the voice instruction is used to turn off the controlled device, the voice receiving device determines that the target area space is an area space in which the start point is located. Based on this embodiment of this application, if the user sends the voice instruction in a moving process, even if the voice instruction of the user does not include an indication for an area space, the home device in the area space that the user wants to control may be controlled.

According to a second aspect, this application provides a voice interaction-based device control method, applied to a controlling device, and including: The controlling device receives area space information and a voice instruction that are sent by a voice receiving device, where the voice instruction is a voice instruction received by the voice receiving device, the area space information indicates a target area space, and there is a correspondence between the target area space and a controlled device. The controlling device determines a control instruction based on the voice instruction, where the control instruction is used to control the controlled device in the target area space. The controlling device determines, based on the target area space and the control instruction, the controlled device that needs to be controlled. The controlling device sends the control instruction to the controlled device. Based on this embodiment of this application, the controlling device may receive the area space information and the voice instruction that are sent by the voice receiving device, determine, based on the area space information and the voice instruction, the controlled device that needs to be controlled, and send the control instruction to the controlled device. In this way, when a user performs voice interaction with a home device, a home device in a specific area space that the user wants to control can be controlled by using a simple voice instruction.

In an implementation, the method further includes: The controlling device receives an execution result sent by the controlled device. The controlling device sends the execution result to a target voice receiving device, or the controlling device sends, to a target voice receiving device, indication information used to provide feedback information. Based on this embodiment of this application, the controlling device may further receive the execution result sent by the controlled device, and send the execution result or the indication information to the target voice receiving device, so that the target voice receiving device provides feedback information for the user.

In an implementation, that the controlling device sends the execution result to the target voice receiving device includes: The controlling device determines the target voice receiving device, and sends the execution result to the target voice receiving device. Based on this embodiment of this application, an entire house of the user may include a plurality of voice receiving devices. In this case, the controlling device may first determine the target voice receiving device, and send the execution result to the target voice receiving device, so that the target voice receiving device can output a feedback to the user.

In an implementation, that the controlling device determines the target voice receiving device includes: The controlling device receives a plurality of corresponding sound signals sent by a plurality of voice receiving devices, where locations of the plurality of voice receiving devices are different. The controlling device determines a face orientation of the user based on intensity distribution of the plurality of sound signals at different frequencies. The controlling device determines a voice receiving device within positive and negative first angle ranges in a direction of the face orientation as the target voice receiving device. Based on this embodiment of this application, the controlling device determines the voice receiving device within the positive and negative first angle ranges in the direction of the face orientation of the user as the target voice receiving device, so that the voice receiving device in a line of sight of the user can provide a feedback for the user, to help the user intuitively obtain a feedback result.

For example, one voice receiving device may send a sound signal to the controlling device, and the controlling device may determine the face orientation of the user based on the plurality of sound signals.

For example, a specific value of the first angle range is not limited in this embodiment of this application. For example, the first angle range is 5 degrees or 8 degrees.

In an implementation, the method further includes: When the voice receiving device does not exist within the positive and negative first angle ranges in the direction of the face orientation of the user, the controlling device determines a voice receiving device closest to the user as the target voice receiving device. Based on this embodiment of this application, if the voice receiving device does not exist within the positive and negative first angle ranges in the direction of the face orientation of the user, the voice receiving device closest to the user is determined as the target voice receiving device. In this way, when the voice receiving device does not exist in the line of sight of the user, the voice receiving device closest to the user provide a feedback for the user, to help the user obtain a feedback result.

In an implementation, the method further includes: When a distance between the voice receiving device within the positive and negative first angle ranges in the direction of the face orientation of the user and the user is greater than a first preset distance, the controlling device determines a voice receiving device closest to the user as the target voice receiving device. Based on this embodiment of this application, if a distance between a voice receiving device in the line of sight of the user and the user is greater than the first preset distance, the voice receiving device closest to the user is determined as the target voice receiving device that provides a feedback for the user. The technical solution helps the user obtain a feedback result nearby.

In an implementation, that the controlling device determines the target voice receiving device includes: When a ratio of distances between two voice receiving devices closest to the user and the user is less than a first ratio, the controlling device determines the voice receiving device closest to the user as the target voice receiving device. The technical solution helps the user obtain a feedback result nearby.

In an implementation, that the controlling device sends, to the target voice receiving device, the indication information used to provide the feedback information includes: When a location of the user and the controlled device are in a same area space, the controlling device determines the indication information based on the execution result, where the indication information indicates the target voice receiving device to provide the feedback information in a visual effect manner and/or a prompt sound effect manner. The controlling device sends the indication information to the target voice receiving device. Alternatively, when a location of the user and the controlled device are in different area spaces, the controlling device determines the indication information based on the execution result, where the indication information indicates the target voice receiving device to provide the feedback information in a manner of indicating the execution result by using a voice instruction. Based on this embodiment of this application, the controlling device may determine different indication information based on a relationship between the location of the user and a location of the controlled device, and therefore indicate the target voice receiving device to output a feedback to the user in different manners in different cases, to meet different requirements of the user.

According to a third aspect, this application provides a voice interaction-based device control method, applied to a controlling device, including: The controlling device receives a voice instruction sent by a voice receiving device. The controlling device determines a control instruction based on the voice instruction, where the control instruction is used to control a controlled device. The controlling device determines a target area space based on a target location in the voice instruction or indication information indicating an area space in the voice instruction, where the target area space is an area space in which the controlled device is located, and there is a correspondence between the target area space and the controlled device. The controlling device determines the controlled device based on the target area space and the control instruction. The controlling device sends the control instruction to the controlled device. Based on this embodiment of this application, the controlling device may receive the voice instruction sent by the voice receiving device, determine the control instruction for controlling the controlled device and the target area space, and send the control instruction to the controlled device, to control the controlled device to execute an instruction of the user. In this way, when a user performs voice interaction with a home device, a home device in a specific area space that the user wants to control can be controlled by using a simple voice instruction.

In an implementation, that the controlling device determines the target area space based on the target location in the voice instruction includes: The controlling device determines an area space corresponding to the target location as the target area space. In this way, the user does not need to accurately say an area space in which the home device that needs to be controlled is located, and can conveniently control home devices in some area spaces by using only a simple voice instruction, to improve voice interaction efficiency.

In an implementation, the determining the target area space based on the indication information indicating the area space in the voice instruction includes: The controlling device determines that the voice instruction includes the indication information, and determines the area space indicated by the indication information as the target area space. Based on this embodiment of this application, when the voice instruction of the user includes the indication information indicating the area space, the voice receiving device may determine that the target area space is the area space indicated by the indication information. In this way, the voice receiving device can determine needed devices in specific area spaces, to improve voice interaction efficiency.

In an implementation, the method further includes: The controlling device receives an execution result sent by the controlled device. The controlling device determines a target voice receiving device. The controlling device sends the execution result to the target voice receiving device. Based on this embodiment of this application, the controlling device may further receive the execution result sent by the controlled device, and send the execution result to the target voice receiving device, so that the target voice receiving device provides feedback information for the user.

In an implementation, that the controlling device determines the target voice receiving device includes: The controlling device receives a plurality of corresponding sound signals sent by a plurality of voice receiving devices, where locations of the plurality of voice receiving devices are different; and determines a face orientation of the user based on intensity distribution of the plurality of sound signals at different frequencies. The controlling device determines a voice receiving device within positive and negative first angle ranges in a direction of the face orientation as the target voice receiving device. Based on this embodiment of this application, the controlling device determines the voice receiving device within the positive and negative first angle ranges in the direction of the face orientation of the user as the target voice receiving device, so that the voice receiving device in a line of sight of the user can provide a feedback for the user, to help the user intuitively obtain a feedback result.

In an implementation, the method further includes: When the voice receiving device does not exist within the positive and negative first angle ranges in the direction of the face orientation, the controlling device determines a voice receiving device closest to the user as the target voice receiving device. Based on this embodiment of this application, if the voice receiving device does not exist within the positive and negative first angle ranges in the direction of the face orientation of the user, the voice receiving device closest to the user is determined as the target voice receiving device. In this way, when the voice receiving device does not exist in the line of sight of the user, the voice receiving device closest to the user provide a feedback for the user, to help the user obtain a feedback result.

According to a fourth aspect, this application provides a voice receiving device, including one or more processors and one or more memories. The one or more memories store one or more programs, and when the one or more programs are executed by the one or more processors, the voice interaction-based device control method in any one of the first aspect or the possible implementations of the first aspect is performed.

According to a fifth aspect, this application provides a controlled device, including one or more processors and one or more memories. The one or more memories store one or more programs, and when the one or more programs are executed by the one or more processors, the voice interaction-based device control method in any one of the second aspect and the third aspect or the possible implementations of the second aspect and the third aspect is performed.

According to a sixth aspect, this application provides an apparatus, including a module configured to implement the voice interaction-based device control method according to any one of the first aspect to the third aspect or the possible implementations of the first aspect to the third aspect.

According to a seventh aspect, this application provides a chip, including a processor and a communication interface. The communication interface is configured to receive a signal, and transmit the signal to the processor, and the processor processes the signal, so that the voice interaction-based device control method in any one of the first aspect or the possible implementations of the first aspect is performed.

According to an eighth aspect, this application provides a chip, including a processor and a communication interface. The communication interface is configured to receive a signal, and transmit the signal to the processor, and the processor processes the signal, so that the voice interaction-based device control method in any one of the second aspect or the possible implementations of the second aspect is performed.

According to a ninth aspect, this application provides a readable storage medium. The readable storage medium stores instructions, and when the instructions are run on a device, the voice interaction-based device control method according to any one of the first aspect or the possible implementations of the first aspect is performed.

According to a tenth aspect, this application provides a readable storage medium. The readable storage medium stores instructions, and when the instructions are run on a device, the voice interaction-based device control method in any one of the second aspect and the third aspect or the possible implementations of the second aspect and the third aspect is performed.

According to an eleventh aspect, this application provides a program product. The program product includes program code, and when the program code is run on a device, the voice interaction-based device control method in any one of the first aspect or the possible implementations of the first aspect is performed.

According to a twelfth aspect, this application provides a program product. The program product includes program code, and when the program code is run on a device, the voice interaction-based device control method in any one of the second aspect and the third aspect or the possible implementations of the second aspect and the third aspect is performed.

### BRIEF DESCRIPTION OF DRAWINGS

FIG. 1 is a diagram of area space information in an entire house according to an embodiment of this application;
FIG. 2(a) and FIG. 2(b) are a diagram of voice interaction according to an embodiment of this application;
FIG. 3(a) to FIG. 3(c) are a diagram of determining a location of a sound source;
FIG. 4 is a diagram of determining a face orientation of a user according to an embodiment of this application;
FIG. 5(a) and FIG. 5(b) are another diagram of voice interaction according to an embodiment of this application;
FIG. 6(a) and FIG. 6(b) are another diagram of voice interaction according to an embodiment of this application;
FIG. 7(a) and FIG. 7(b) are another diagram of voice interaction according to an embodiment of this application;
FIG. 8(a) and FIG. 8(b) are another diagram of voice interaction according to an embodiment of this application;
FIG. 9(a) and FIG. 9(b) are another diagram of voice interaction according to an embodiment of this application;
FIG. 10 is an interaction diagram of a voice interaction method according to an embodiment of this application;
FIG. 11 is an interaction diagram of a voice interaction method according to an embodiment of this application; and
FIG. 12 is a block diagram of a device according to an embodiment of this application.

### DESCRIPTION OF EMBODIMENTS

The following describes technical solutions of this application with reference to the accompanying drawings.

A voice interaction-based device control method in embodiments of this application may be applied to a smart home device. For example, the smart home device may be a device such as a house-wide smart host, a house-wide smart central control panel, a smart speaker, a light or light group, a sensor, a smart curtain, a smart door lock, a robotic vacuum cleaner, or an air conditioner. The method may be further applied to a device such as a smartphone or a tablet computer.

In a house-wide smart scenario, a user may control a home device by performing voice interaction with a smart device. For example, the user may perform voice interaction with a smart speaker, to implement a requirement of controlling the home device.

However, when performing voice interaction with the smart device, the user needs to accurately say a name of the home device to control the home device. For control on a home device in a specific area in an entire house, a current voice interaction manner cannot meet this requirement of the user.

In view of this, this application provides a voice interaction-based device control method and a device, to conveniently control a home device in a specific area space.

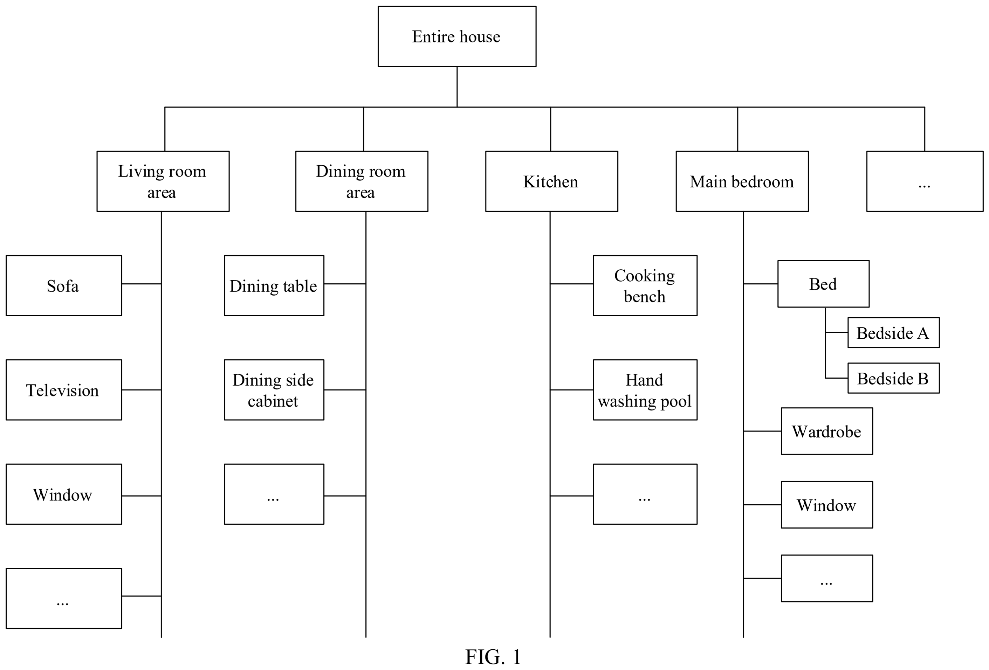

The following describes the voice interaction-based device control method in embodiments of this application with reference to FIG. 1 to FIG. 11.

For example, FIG. 1 is a diagram of area space information of an entire house according to an embodiment of this application. As shown in FIG. 1, a device 1 owned by a user may include the area space information of the entire house, and the area space information indicates space distribution of the entire house of the user.

For example, the device 1 may be a house-wide smart host, a cloud host, a central control panel, or the like. This embodiment of this application is described by using an example in which the device 1 is the house-wide smart host.

Refer to FIG. 1. The entire house may be divided into area spaces such as a living room area, a dining room area, a kitchen, a main bedroom, and a secondary bedroom.

In some examples, the area space information may be pre-stored in the house-wide smart host, a cloud server, or the device 1.

It should be understood that a manner of determining or obtaining the area space information is not limited in this embodiment of this application.

For example, the area space information may be manually marked by the user. For example, the user manually marks a point location map or a point cloud map of the area spaces in the entire house in a display interface of a control application, and stores the point location map or the point cloud map in the house-wide smart host, the cloud server, or the device 1 after the marking is completed.

Alternatively, the area space information may be configured in the house-wide smart host or the cloud server in a manner of a configuration file.

Alternatively, the area space information may be determined by a smart robot or a robotic vacuum cleaner. Then, the smart robot or the robotic vacuum cleaner may send the area space information to the house-wide smart host, the cloud server, or the device 1.

For example, the living room area may further include areas such as a sofa, a television, and a window. Correspondingly, the living room area is a level-1 area subspace, and the sofa area, the television area, and the window area are level-2 area subspaces. It may be understood that the living room area includes a plurality of areas such as the sofa area, the television area, and the window area.

The dining room area may further include areas such as a dining table and a dining side cabinet. Correspondingly, the dining room area is a level-1 area subspace, and the areas such as the dining table and the dining side cabinet are level-2 area subspaces.

The kitchen area may further include areas such as a cooking bench and a hand washing pool. Correspondingly, the kitchen area is a level-1 area subspace, and the areas such as the cooking bench and the hand washing pool are level-2 area subspaces.

The main bedroom area may further include areas such as a bed, a wardrobe, and a window. The bed area may further include areas such as a bedside A and a bedside B. Correspondingly, the main bedroom area is a level-1 area subspace, the bed area, the wardrobe area, and the window area are level-2 area subspaces, and the areas in which the bedside A and the bedside B are located are level-3 area subspaces.

It should be understood that the area space information may be distinguished in a form of space coordinates. For example, a space coordinate system may be established by using a center of the entire house as an origin, so that coordinates of the living room area, the dining room area, the kitchen area, and the main bedroom area are different. The sofa area included in the living room area can also be distinguished by using space coordinates. The living room area may store coordinates of each vertex of the sofa, so that the area in which the sofa is located can be distinguished.

In this way, the entire house is divided into different area spaces, and each area space may correspond to a different home device. Similarly, the smart host, the cloud server, or the device 1 may further store area space information of each home device. It should be understood that the foregoing describes only some area spaces that may be arranged in the entire house.

For example, Table 1 shows a correspondence between a home device and area space information.

**Table 1**

| Name | Medium access control mac address | Attribute | Area space 1 | Area space 2 | Area space 3 | ... |
|---|---|---|---|---|---|---|
| Light group 1 | mac1 to mac3 | Downlight | Living room area | Television | | |
| Light group 2 | mac4 to mac7 | Downlight | Living room area | Sofa | | |
| Light group 3 | mac8 to mac11 | Downlight | Living room area | Sofa | | |
| Light group 4 | mac12 to mac14 | Downlight | Dining room area | Dining table | | |
| Device 5 | mac15 | Chandelier | Main bedroom | Bed | Bedside A | |
| Device 6 | mac16 | Light strip | Main bedroom | Bed | Bedside B | |
| Device 7 | mac17 | Curtain | Main bedroom | Window | | |
| Device 8 | mac18 | Air conditioner | Secondary bedroom | | | |
| ... | ... | ... | ... | ... | | |

The home device may correspond to the area space information in a form of a group. For example, the downlight usually exists in a form of a light group. During control by the user, the light group may be simultaneously turned on or off, or the light group may be partially turned on or off.

For example, the area space may further have a hierarchical relationship. Refer to Table 1. An area space corresponding to the light group 1 is the television area in the living room area. An area space corresponding to the light group 2 and the light group 3 is the sofa area in the living room area. An area space corresponding to the light group 4 is the dining table area in the dining room area in the living room area.

Alternatively, the home device may separately correspond to the area space information. For example, an area space corresponding to the device 7 is the window area in the main bedroom. An area space corresponding to the device 8 is the secondary bedroom.

In this way, the entire house of the user is divided into a plurality of area spaces, and each home device corresponds to one area space. Therefore, when subsequently controlling a home device by using a voice, the user can conveniently control a home device in an area space.

It should be understood that, in another example, a part of area spaces may not correspond to a device, a part of area spaces may correspond to a light or light group, and a part of area spaces may correspond to a plurality of types of devices such as a light group, a smart refrigerator, and a smart curtain.

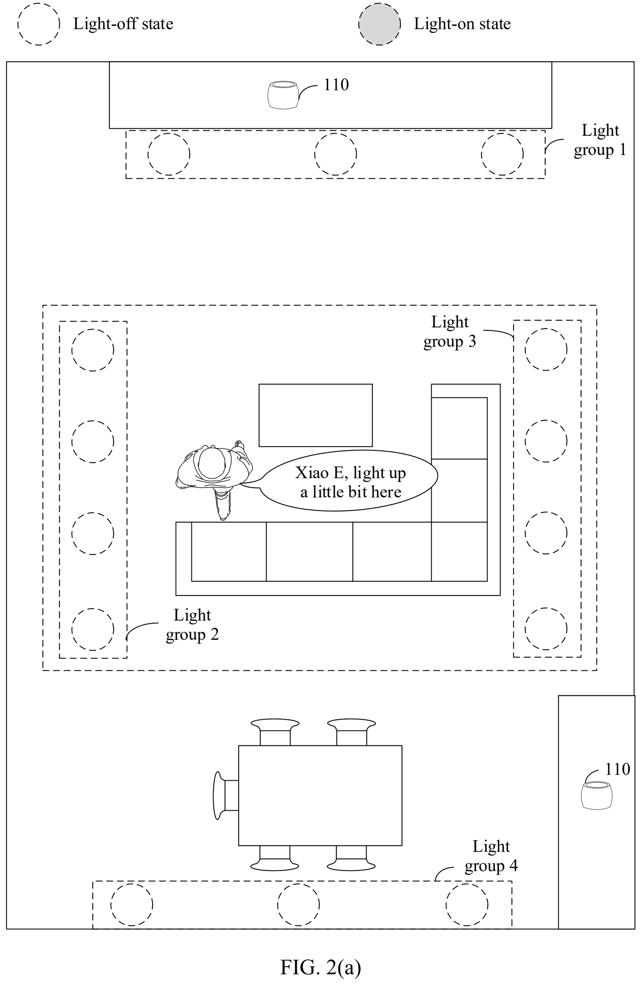

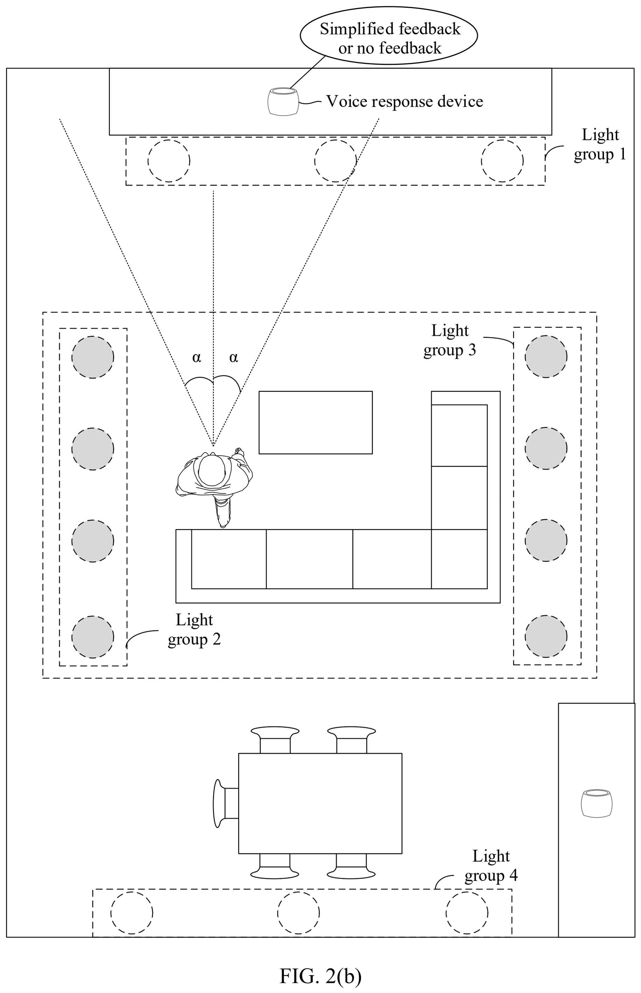

The following describes solutions of the voice interaction-based device control method in embodiments of this application with reference to FIG. 2(a) and FIG. 2(b) to FIG. 11.

For example, FIG. 2(a) and FIG. 2(b) are a diagram of voice interaction according to an embodiment of this application. FIG. 2(a) and FIG. 2(b) show a process in which a user controls a home device by using a voice instruction.

FIG. 2(a) shows a part of a house-wide floor plan of the user. For example, FIG. 2(a) may include a living room area and a dining room area in area space information of an entire house.

In some examples, the living room area may further include a sofa area and a television area. The television area may correspond to a light group 1, and the sofa area may correspond to a light group 2 and a light group 3.

In some examples, the dining room area may include a dining table area and a dining side cabinet area. The dining table area may correspond to a light group 4. The dining side cabinet area may correspond to another light group (not shown in the figure).

FIG. 2(a) may further include a plurality of voice receiving devices 110.

For example, the voice receiving device 110 may be a smart speaker, a smart central control screen, a central control panel, a separate microphone module, or the like. In this embodiment of this application, an example in which the voice receiving device 110 is the smart speaker is used for description.

In some examples, when the user utters a voice instruction "Xiao E, light up a little bit here" in the sofa area of the living room area, the voice receiving device 110 may send the voice instruction to a house-wide smart host. The house-wide smart host may determine a control instruction "light up a little bit" in the voice instruction and area space information "here".

The area space information "here" in the voice instruction is a vague concept. Therefore, the house-wide smart host further needs to determine a location of the user.

In an example, the voice receiving device may determine the location of the user based on an angle of arrival of a received sound signal of the user. The house-wide smart host may receive the location of the user from the voice receiving device.

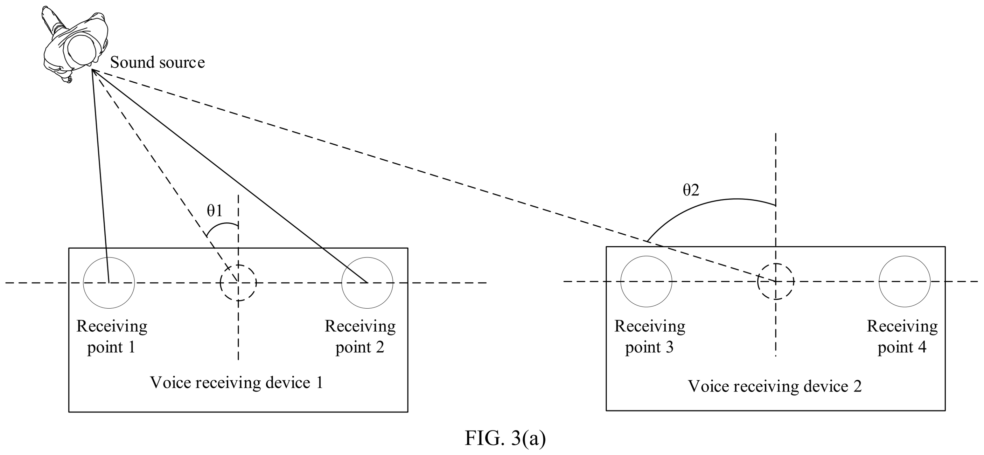

For example, FIG. 3(a) to FIG. 3(c) are a diagram of determining a location of a sound source. As shown in FIG. 3(a), the location of the sound source may be determined by a plurality of voice receiving devices. Each voice receiving device may include a plurality of sound signal receiving points. For example, a voice receiving device 1 may include a receiving point 1 and a receiving point 2, and the receiving points 1 and 2 may form a microphone array; and a voice receiving device 2 may include a receiving point 3 and a receiving point 4, and the receiving points 3 and 4 may form a microphone array.

The voice receiving device 1 may determine an angle of arrival Θ1 of a sound signal by using the sound signal received by the receiving point 1 and the receiving point 2, and the voice receiving device 2 may determine an angle of arrival Θ2 of a sound signal by using the sound signal received by the receiving point 3 and the receiving point 4. Because locations of the voice receiving device 1 and the voice receiving device 2 are known, the location of the sound source, that is, a location of a user, may be determined.

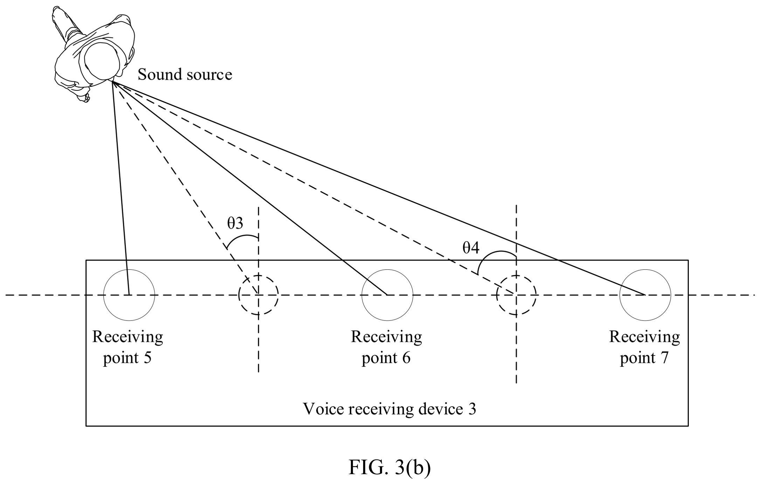

As shown in FIG. 3(b), the location of the sound source may alternatively be determined by one voice receiving device 3, and the voice receiving device 3 may include at least three receiving points of the sound signal. For example, the voice receiving device 3 may include a receiving point 5, a receiving point 6, and a receiving point 7.

The voice receiving device 3 may determine an angle of arrival Θ3 of a sound signal by using the sound signal received by the receiving point 5 and the receiving point 6, and may determine an angle of arrival Θ4 of a sound signal by using the sound signal received by the receiving point 6 and the receiving point 7, to determine the location of the sound source.

Then, the voice receiving device may send the determined location of the sound source to a house-wide smart host.

Alternatively, the voice receiving device may further send the angle of arrival of the received sound signal of the user to the house-wide smart host, and the house-wide smart host calculates a location of the user relative to the voice receiving device. Because the location of the voice receiving device is known, the current location of the user may be determined.

In another example, the house-wide smart host may alternatively determine the current location of the user by using data obtained by a millimeter-wave sensor and the voice receiving device.

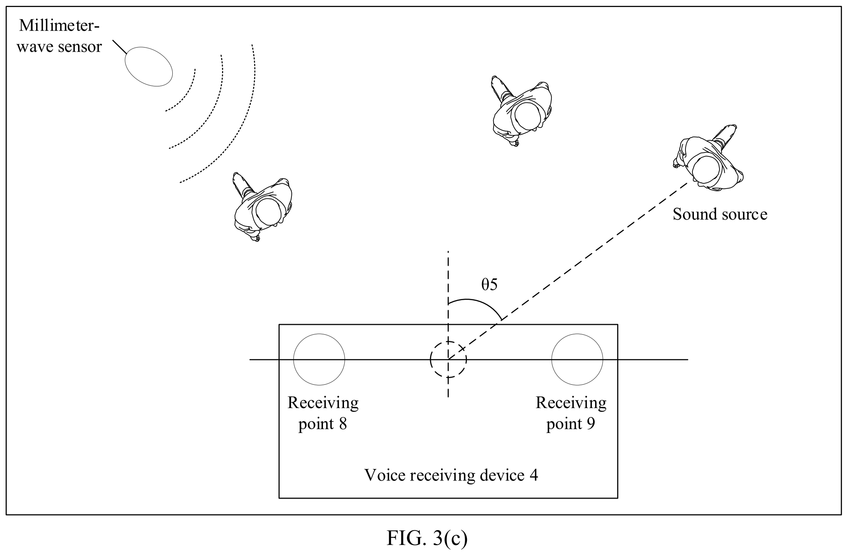

As shown in FIG. 3(c), when there are a plurality of users, the house-wide smart host may first determine approximate locations of the plurality of users by using a millimeter-wave sensor, and then determine an angle of arrival Θ4 of a sound signal by using the sound signal received by a receiving point 8 and a receiving point 9 of a voice receiving device 4, so that a location of a user that utters a voice instruction may be determined from the plurality of locations based on the angle of arrival Θ4.

After determining the location of the user, the house-wide smart host may determine, based on the location, an area space in which the user is located. For example, if the house-wide smart host determines that the user is located in the sofa area of the living room area, the house-wide smart host may send a light-on instruction to the light group 2 and the light group 3 corresponding to the sofa area; or when the light group 2 and the light group 3 are already in a light-on state, the house-wide smart host may control the light group 2 and the light group 3 to increase brightness.

Refer to FIG. 2(b). The light group 2 and the light group 3 in the sofa area may change from a light-off state to a light-on state under control of the house-wide smart host.

Based on this embodiment of this application, the user is located in the sofa area of the living room area. After the device receives the voice instruction "light up a little bit here", the light group 2 and the light group 3 in the sofa area are lit, so that the home device in the area space in which the user is located may be controlled.

In addition, the house-wide smart host may further determine, based on the orientation of the user, a voice receiving device that feeds back a result to the user, and a manner in which the voice receiving device feeds back the result to the user.

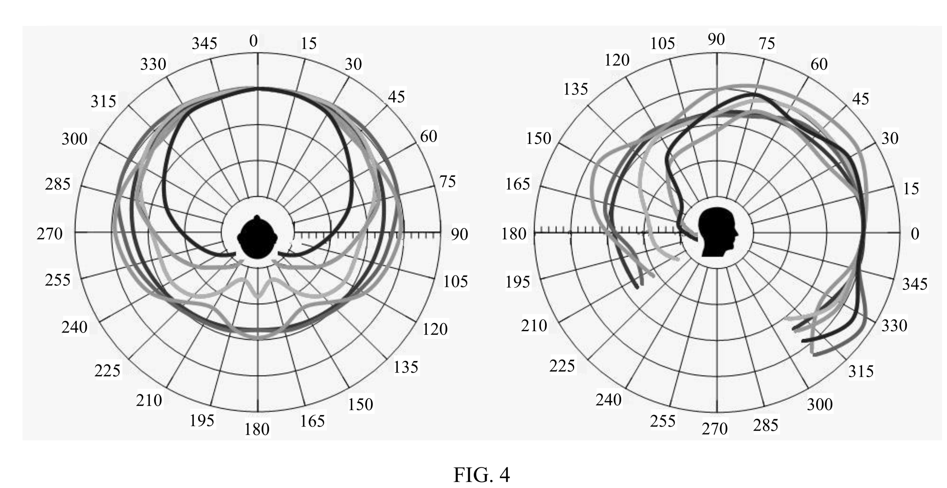

In some examples, FIG. 4 is a diagram of determining a face orientation of a user according to an embodiment of this application. A neural network model may be pre-deployed in the house-wide smart host, and the house-wide smart host may perform, by using the neural network model, inference calculation on intensity of sound signals received by a plurality of voice receiving devices at each frequency, to determine the face orientation of the user. It should be understood that the plurality of voice receiving devices may be at different locations. For example, the voice receiving device 1 is at a location of a number 1 in FIG. 4, and the voice receiving device 2 is at a location of a number 2 in FIG. 4. In this way, intensity of sound information received by the voice receiving device 1 is different from intensity of sound information received by the voice receiving device 2.

In another example, the voice receiving devices 1 and 2 may further separately determine a posture of the user, and separately send the determined posture to the house-wide smart host. The house-wide smart host may determine the face orientation of the user based on the plurality of received postures.

Alternatively, the house-wide smart host may further determine the face orientation of the user by using an image or a video obtained by a camera.

It should be understood that the house-wide smart host may be alternatively replaced with a cloud server, a server, or a voice receiving device. This is not limited in this embodiment of this application.

The house-wide smart host may determine a voice receiving device within positive and negative angles α ranges of the face orientation of the user as a voice receiving device that feeds back a result to the user. The voice receiving device that feeds back the result to the user may be referred to as a voice response device.

For example, the angle α may be 15 degrees, 10 degrees, or the like. A specific value of the angle α is not limited in this embodiment of this application.

When determining a manner in which the voice response device feeds back the result to the user, the house-wide smart host may determine a final feedback result manner based on whether the location of the user and the area space in which the home device that needs to be controlled is located are in a same area space.

In some examples, with reference to FIG. 2(b), when the location of the user and the area space in which the home device that needs to be controlled is located are in the same area space, the user may immediately obtain a result of executing the voice instruction by the home device. Therefore, the house-wide smart host may indicate the voice response device to perform a simplified feedback or not to perform a feedback.

For example, the house-wide smart host may indicate the voice response device to perform only a ring tone feedback, for example, play a brief alert tone; or the house-wide smart host may indicate the voice response device to perform an indicator blinking feedback; or the house-wide smart host may further indicate the voice response device not to perform a feedback, to reduce interference to the user.

In another example, if the location of the user and the area space in which the home device that needs to be controlled is located are in different area spaces, the user cannot immediately obtain a result of executing the voice instruction by the home device. Therefore, the house-wide smart host may indicate the voice response device to feed back the execution result in detail.

For example, the user utters a voice instruction "turn off the air conditioner in another room" in the sofa area. After the house-wide smart host performs a corresponding operation based on the voice instruction, the house-wide smart host may indicate the voice response device to perform a voice output "the air conditioner in another room has been turned off for you". Therefore, when the user cannot immediately obtain the execution result of the home device, the voice response device feeds back a detailed execution result to the user, so that the user can learn of the result of executing the voice instruction of the user by the home device.

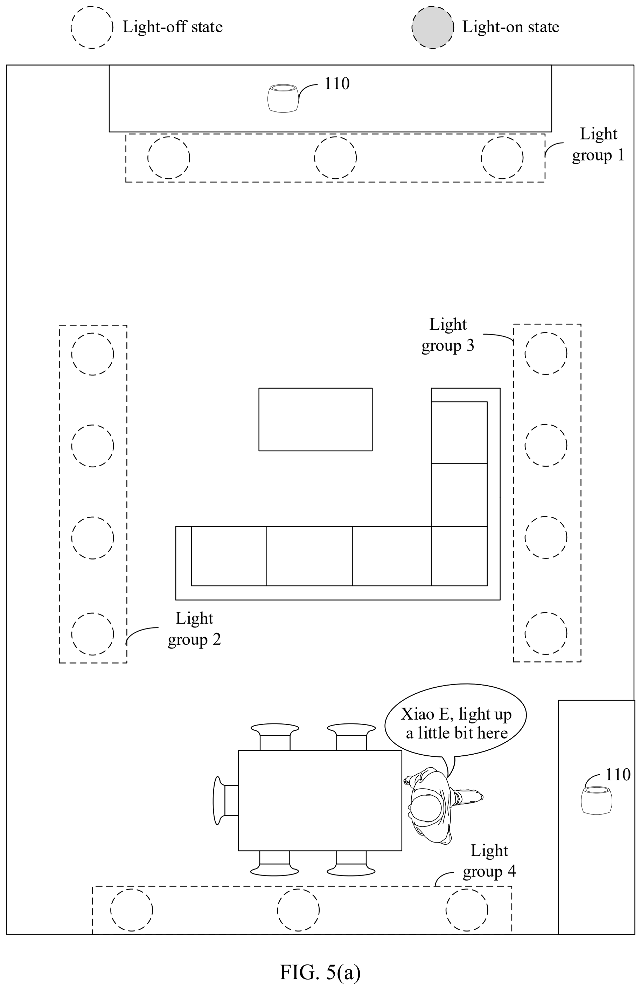

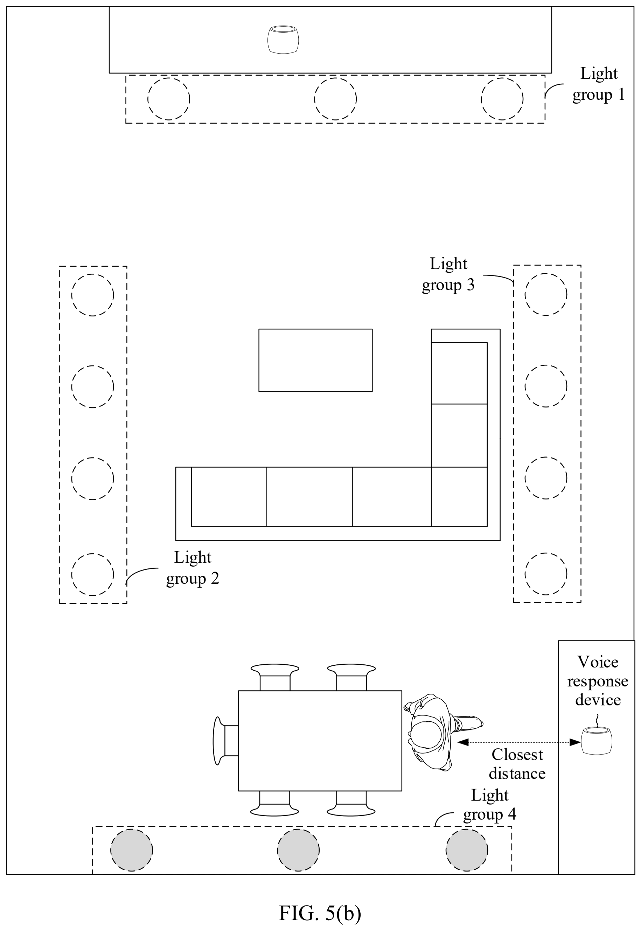

FIG. 5(a) and FIG. 5(b) are another diagram of voice interaction according to an embodiment of this application. FIG. 5(a) and FIG. 5(b) show a process in which a user controls a home device by using a voice instruction.

FIG. 5(a) shows a part of a house-wide floor plan of the user. It should be understood that, for area space information included in FIG. 5(a), refer to the related descriptions of FIG. 2(a). For brevity, details are not described herein again.

Refer to FIG. 5(a). A difference from FIG. 2(a) is that a location of the user is in a dining table area of a dining room area. When the user utters a voice instruction "Xiao E, light up a little bit here" in the dining table area, a voice receiving device 110 may send the voice instruction to a house-wide smart host. The house-wide smart host may determine a control instruction "light up a little bit" in the voice instruction and area space information "here".

It should be understood that the house-wide smart host may determine the location of the user in the foregoing manner. When determining that the location of the user is in the dining table area, the house-wide smart host may send a light-on instruction to a light group 4 corresponding to the dining table area; or when a light group 4 is already in a light-on state, the house-wide smart host may control the light group 4 to increase brightness.

Refer to FIG. 5(b). The light group 4 in the dining table area may change from a light-off state to a light-on state under control of the house-wide smart host.

Based on this embodiment of this application, the user is located in the dining table area of the dining room area. After the user utters the voice instruction "light up a little bit here", the light group 4 in the dining table area is lit, so that the home device in the area space in which the user is located may be controlled.

In addition, the house-wide smart host may further determine a face orientation of the user in the foregoing manner.

Still refer to FIG. 5(b). Any voice receiving device does not exist within positive and negative angle α ranges of the face orientation of the user. In this case, the house-wide smart host may determine a voice receiving device closest to the location of the user as a voice response device that provides a feedback for the user.

In some other implementations, the voice receiving device exists within positive and negative angle α ranges of the face orientation of the user, but when a distance between the location of the user and the voice receiving device is greater than a preset distance, the house-wide smart host may determine a voice receiving device closest to the location of the user as a voice response device that provides a feedback for the user.

For example, the preset distance is 10 meters, 8 meters, or the like. A specific value of the preset distance is not limited in this embodiment of this application.

In some other implementations, if a ratio of distances between the location of the user and two voice receiving devices closest to the location of the user is less than a preset ratio, the house-wide smart host may determine the voice receiving device closest to the location of the user as a voice response device that provides a feedback for the user.

For example, the preset ratio may be 1:2, 1:3, or the like. A specific value of the preset ratio is not limited in this embodiment of this application.

In some examples, because the location of the user and the area space in which the home device that needs to be controlled is located are in a same area space, the user may immediately obtain a result of executing the voice instruction by the home device. Therefore, the house-wide smart host may indicate the voice response device to perform a simplified feedback or not to perform a feedback, to reduce interference to the user.

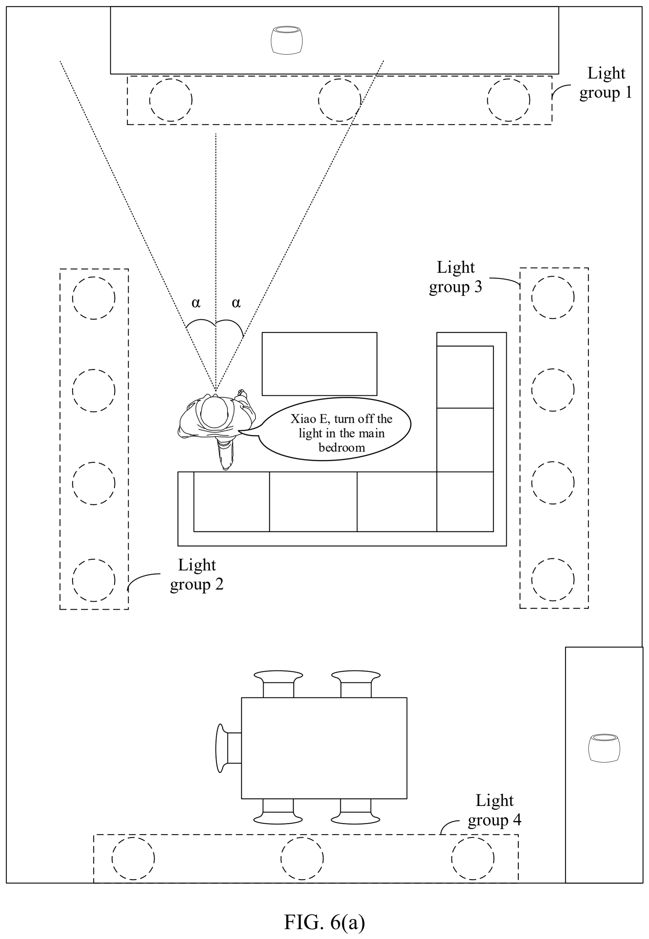

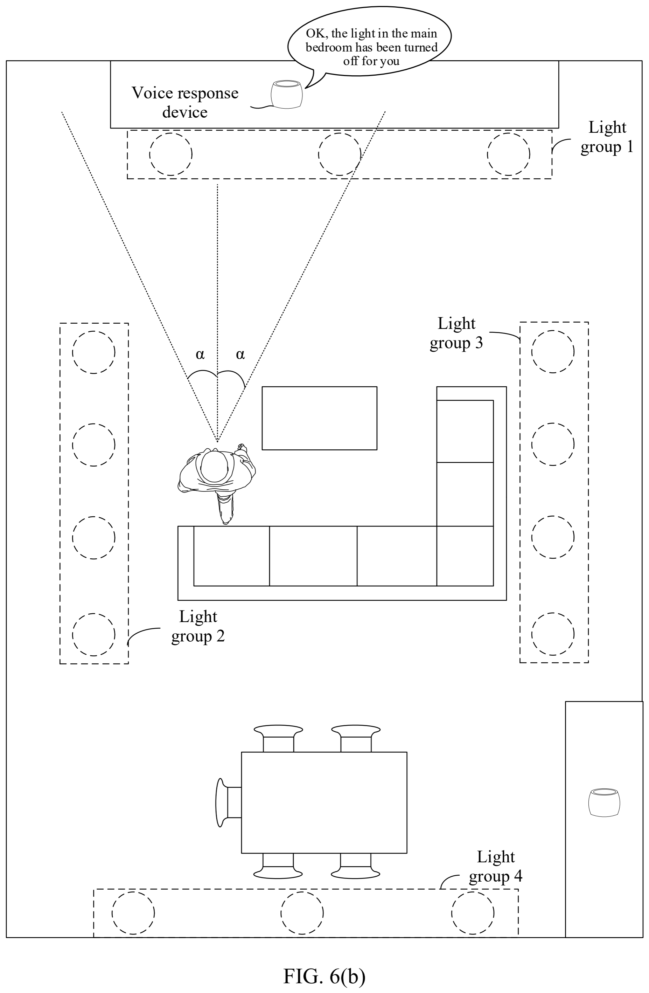

In another example, if the location of the user and the area space in which the home device that needs to be controlled is located are in different area spaces, the user cannot immediately obtain a result of executing the voice instruction by the home device. Therefore, the house-wide smart host may indicate the voice response device to feed back the execution result. The following describes the technical solution with reference to FIG. 6(a) and FIG. 6(b).

For example, FIG. 6(a) and FIG. 6(b) are another diagram of voice interaction according to an embodiment of this application. FIG. 6(a) and FIG. 6(b) show a process in which a user controls a home device by using a voice instruction.

It should be understood that, for area space information included in FIG. 6(a), refer to the related descriptions of FIG. 2(a). For brevity, details are not described herein again.

Refer to FIG. 6(a). A difference from FIG. 2(a) is that a location of the user is in a sofa area of a living room area. When the user utters a voice instruction "Xiao E, turn off the light in the main bedroom" in the sofa area, a voice receiving device may send the voice instruction to a house-wide smart host. The house-wide smart host may determine a control instruction "turn off" in the voice instruction and area space information "main bedroom". Therefore, the house-wide smart host may control the light in the main bedroom to be turned off.

The house-wide smart host may determine a face orientation of the user. Refer to FIG. 6(b). If a voice receiving device exists in positive and negative angles α ranges of the face orientation of the user, the house-wide smart host may determine the voice receiving device as a voice response device that provides a feedback for the user.

After determining that the location of the user is in the sofa area, the house-wide smart host may determine that the location of the user and the area space in which the home device that needs to be controlled is located are in different area spaces. In this case, the house-wide smart host may indicate the voice response device to feed back an execution result.

In some examples, after the house-wide smart host controls the light in the main bedroom to be turned off, the house-wide smart host may indicate the voice response device to output a voice "OK, the light in the main bedroom has been turned off for you".

In this way, because the location of the user and the area space in which the home device that needs to be controlled is located are not in the same area space, the voice response device may output the execution result by using the voice, so that the user can learn of the result of executing the voice instruction of the user by the home device.

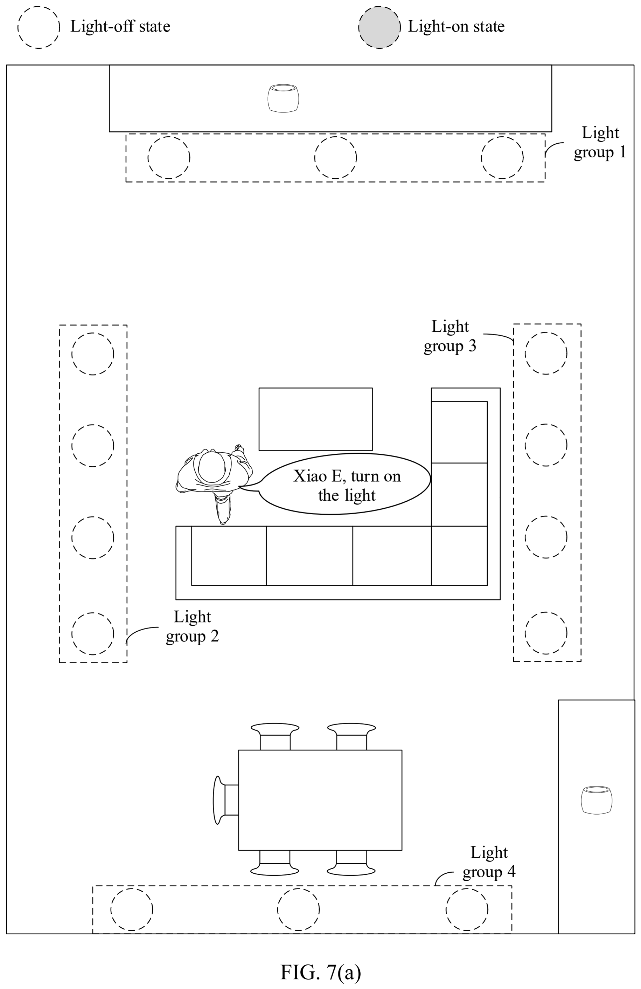

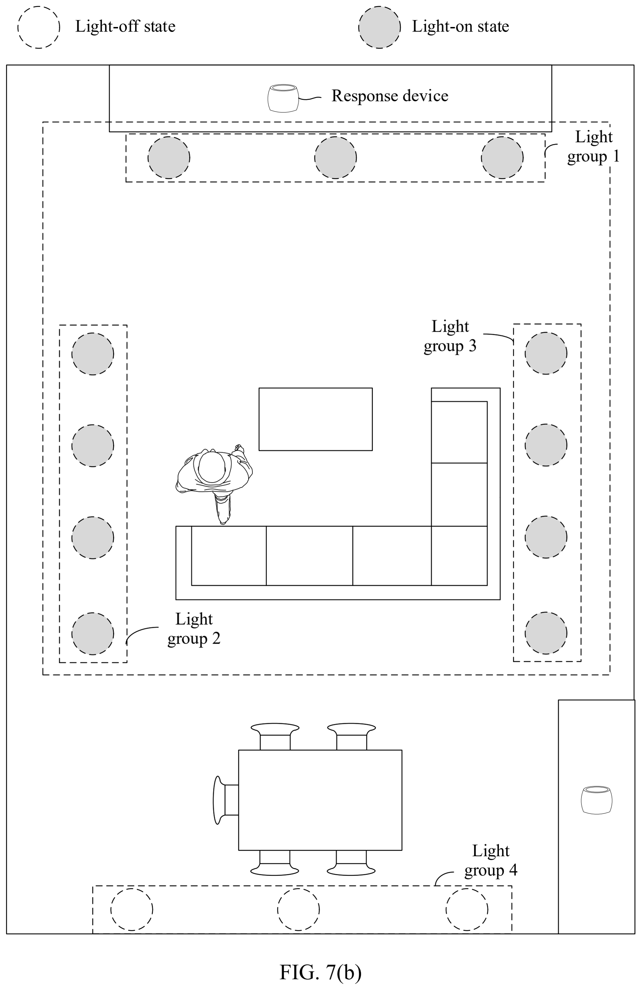

In some cases, the voice instruction of the user may not include an indication for an area space. In this case, the house-wide smart host cannot determine home devices in specific area spaces that the user wants to control. In this case, the house-wide smart host may determine the area space of the location of the user, and use a level-1 area space to which the area space belongs as the area space of the home device that needs to be controlled. The following describes the technical solution with reference to FIG. 7(a) and FIG. 7(b).

For example, FIG. 7(a) and FIG. 7(b) are another diagram of voice interaction according to an embodiment of this application. FIG. 7(a) and FIG. 7(b) show a process in which a user controls a home device by using a voice instruction.

It should be understood that, for area space information included in FIG. 7(a), refer to the related descriptions of FIG. 2(a). For brevity, details are not described herein again.

Refer to FIG. 7(a). When the user utters a voice instruction "Xiao E, turn on the light" in a sofa area, a voice receiving device may send the voice instruction to a house-wide smart host. The house-wide smart host may determine a control instruction "turn on the light" in the voice instruction.

A location of the user is in the sofa area in a level-2 area subspace. Because the voice instruction of the user does not include any indication for an area space, the house-wide smart host may determine an area space corresponding to the home device that needs to be controlled as a level-1 area subspace "living room area" to which the sofa area belongs. Then, the house-wide smart host may control all lights in a living room to be turned on, or a default lighting mode of the living room to be turned on. For example, the lighting mode may be an ordinary illumination mode, a guest-welcoming mode, or the like.

Refer to FIG. 7(b). A light group 1, a light group 2, and a light group 3 in the living room area may change from a light-off state to a light-on state under control of the house-wide smart host.

In another example, a part of light groups in the living room area may alternatively change from a light-off state to a light-on state. For example, the light group 2 and the light group 3 change from the light-off state to the light-on state under control of the house-wide smart host, or the light group 2 changes from the light-off state to the light-on state under control of the house-wide smart host.

Based on this embodiment of this application, when the voice instruction of the user does not include the indication for the area space, the house-wide smart host may determine the area space of the location of the user, use the area space of the location of the user or the area space of the location of the user and an adjacent area space as the area space of the home device that needs to be controlled, and control the corresponding home device based on the voice instruction of the user. In this way, the user does not need to say a space in which the home device that needs to be controlled is located, and can conveniently control home devices in some area spaces by using only a simple voice instruction, to improve voice interaction efficiency.

With reference to FIG. 2(a) and FIG. 2(b) to FIG. 7(a) and FIG. 7(b), the foregoing describes a case in which the location of the user may be fixed or slightly changed when the user performs voice interaction with the home device. However, in some cases, the user may move while uttering a voice instruction, or the user may utter a voice instruction in a moving process. In this case, the location of the user may change. For example, when uttering a voice instruction, the user may move from a living room area to a dining room area. In this case, an area space that the user wants to control may be the living room area or the dining room area.

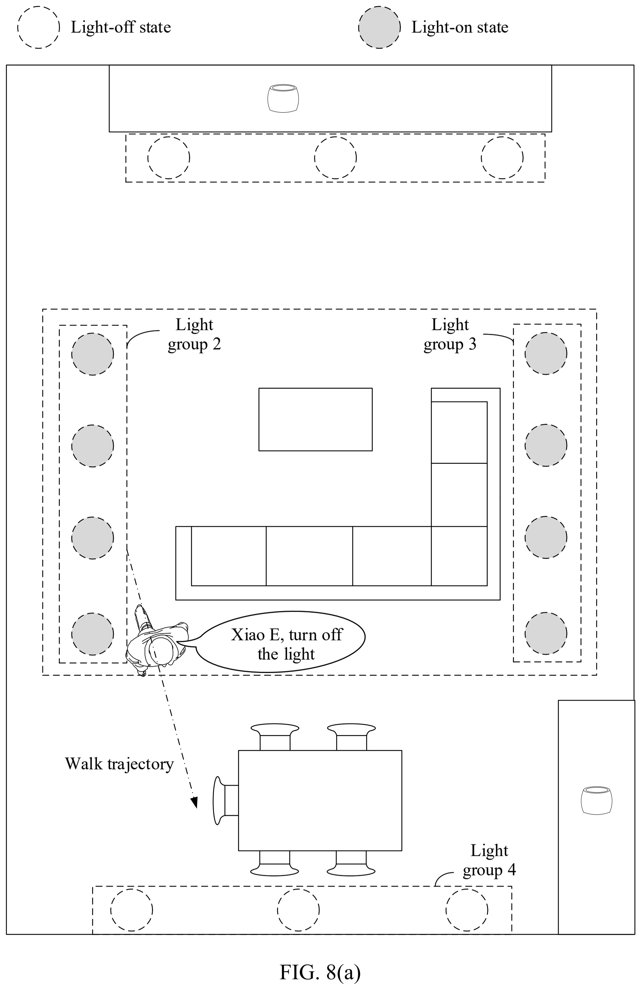

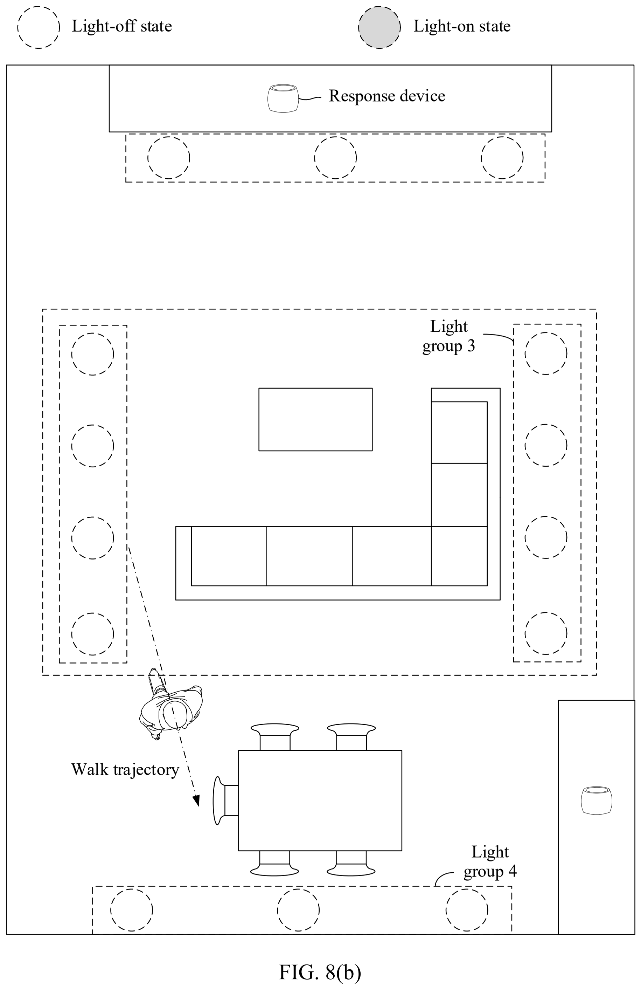

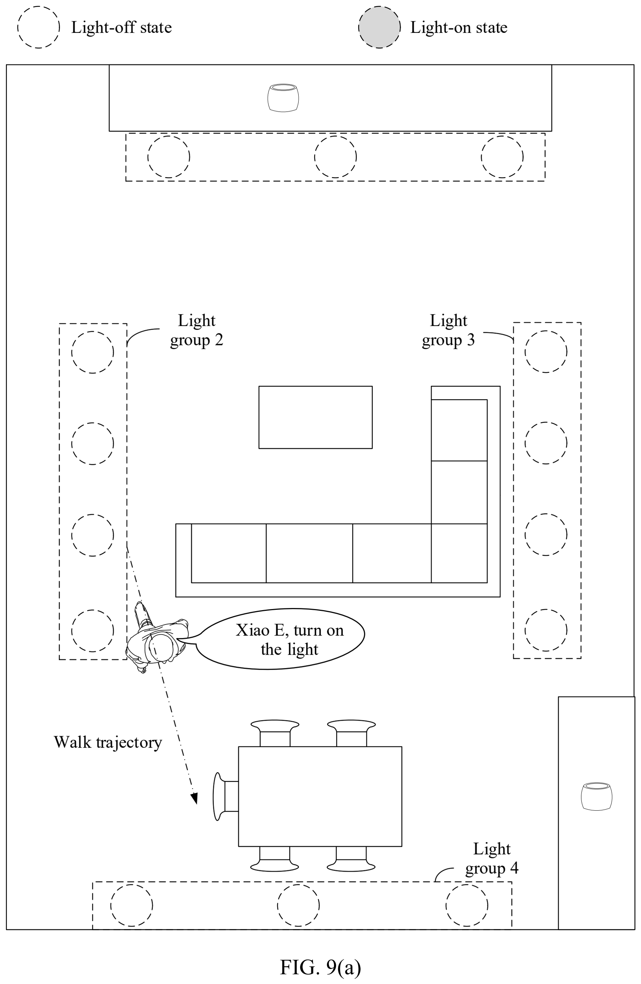

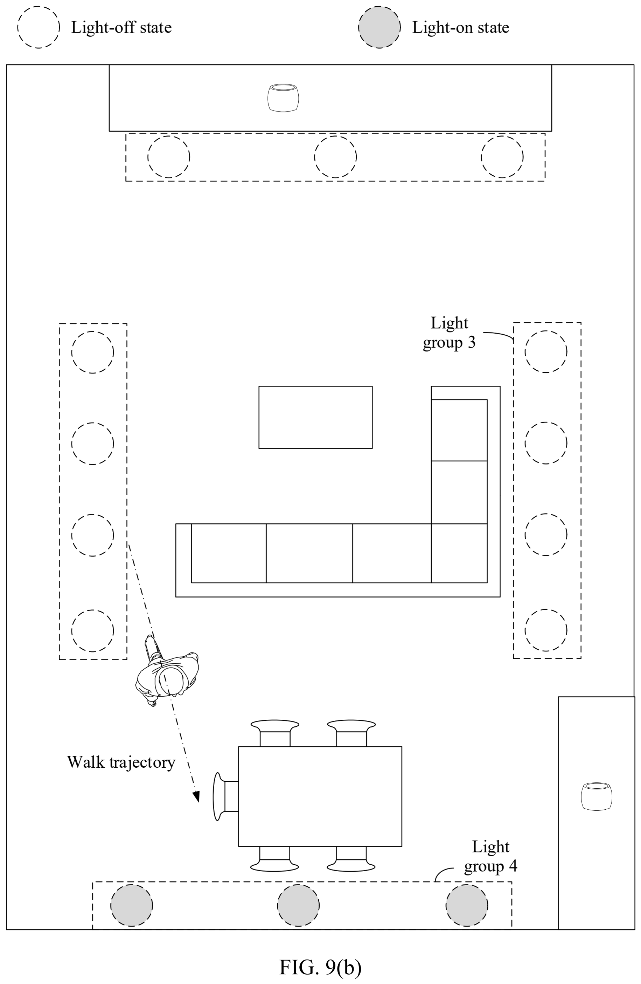

The following describes the technical solution with reference to FIG. 8(a) and FIG. 8(b) and FIG. 9(a) and FIG. 9(b).

For example, FIG. 8(a) and FIG. 8(b) are another diagram of voice interaction according to an embodiment of this application. FIG. 8(a) and FIG. 8(b) show a process in which a user controls a home device by using a voice instruction.

It should be understood that, for area space information included in FIG. 8(a), refer to the related descriptions of FIG. 2(a). For brevity, details are not described herein again.

Refer to FIG. 8(a). A current location 1 of the user is near a sofa area in a living room area, and a light group 2 and a light group 3 in the sofa area are in a light-on state. When uttering a voice instruction "Xiao E, turn off the light", the user moves from the sofa area in the living room area to a dining room area.

After receiving the voice instruction, a voice receiving device may send the voice instruction to a house-wide smart host. The house-wide smart host may determine a control instruction "turn off' in the voice instruction, and the house-wide smart host further needs to determine that the user utters the voice instruction in a moving process.

In some examples, the home device may determine that the user utters the voice instruction in the moving process, and send a result to the house-wide smart host. Alternatively, the house-wide smart host may determine, based on information obtained by the home device, that the user utters the voice instruction in the moving process.

For example, a camera may determine, by using an obtained audio and an obtained video image, that the user utters the voice instruction in the moving process. Alternatively, a camera may send an obtained audio and an obtained video image to the house-wide smart host, and the house-wide smart host determines, by using the audio and the video image, that the user utters the voice instruction in the moving process.

For another example, a plurality of millimeter-wave sensors may be distributed in an entire house of the user, the plurality of millimeter-wave sensors may determine movement of the user by using obtained data, and the voice receiving device can receive a sound signal sent by the user, to determine that the user utters the voice instruction in the moving process.

In addition, the home device may further predict a movement trajectory of the user when determining that the user moves. It should be understood that the movement trajectory may also be referred to as a walk trajectory, a motion trajectory, and the like.

For example, the movement trajectory of the user may be predicted by using the camera or the millimeter-wave sensor.

Alternatively, the movement trajectory of the user may be predicted in the foregoing sound source positioning manner. For example, the voice receiving device may obtain a start voice instruction and an end voice instruction in voice instructions of the user, and separately perform sound source positioning on the start voice instruction and the end voice instruction, to determine the movement trajectory of the user in a process of uttering the voice instruction, so as to further predict a next movement trajectory of the user.

Still refer to FIG. 8(a). The movement trajectory may be a trajectory from the sofa area in the living room area to the dining room area.

In this case, the house-wide smart host may determine that the user is to move from the sofa area in the living room area to the dining room area, and determine, with reference to the control instruction "turn off the light" in the voice instruction of the user, that the user wants to turn off the light group 2 and the light group 3 in the sofa area that the user leaves. Then, the house-wide smart host may control the light group 2 and the light group 3 to be turned off.

Refer to FIG. 8(b). The light group 2 and the light group 3 in the sofa area may change from a light-on state to a light-off state under control of the house-wide smart host.

Based on this embodiment of this application, when the user utters the voice instruction "turn off the light" in the moving process, the house-wide smart host may control a light or light group in an area space that the user leaves to be turned off, so that even if the voice instruction of the user does not include an indication for an area space, the home device in the area space that the user wants to control may be controlled.

In another example, when the user utters the voice instruction "Xiao E, turn off the light" in the process of moving from the sofa area in the living room area to the dining room area, if the house-wide smart host determines that only the light group 2 and the light group 3 in the living room area and the dining room area are in the light-on state currently, other lights are in the light-off state, and current time is at night or data obtained by an ambient light sensor is less than a preset value, the house-wide smart host may turn on the light group 4 in the dining table area in the to-be-approached dining room area in the movement trajectory of the user while controlling the light group 2 and the light group 3 to be turned off. In this way, the user can be prevented from walking in the dark, and a degree of intelligence of the home device can be improved.

For example, FIG. 9(a) and FIG. 9(b) are another diagram of voice interaction according to an embodiment of this application. FIG. 9(a) and FIG. 9(b) show a process in which a user controls a home device by using a voice instruction.

It should be understood that, for area space information included in FIG. 9(a), refer to the related descriptions of FIG. 2(a). For brevity, details are not described herein again.

Refer to FIG. 9(a). A current location 1 of the user is near a sofa area in a living room area, and the user moves to a dining room area while uttering a voice instruction "Xiao E, turn on the light".

After receiving the voice instruction, a voice receiving device may send the voice instruction to a house-wide smart host. The house-wide smart host may determine a control instruction "turn on the light" in the voice instruction, and the house-wide smart host further needs to determine that the user utters the voice instruction in a moving process.

In addition, the home device may further predict a movement trajectory of the user when determining that the user moves. For example, the house-wide smart host may predict a movement trajectory of the user by using the camera or the millimeter-wave sensor.

It should be understood that, for a manner in which the house-wide smart host determines that the user utters the voice instruction in the moving process and a manner in which the movement trajectory of the user is predicted, refer to the related descriptions in FIG. 8(a) and FIG. 8(b).

Still refer to FIG. 9(a). The movement trajectory may be from the sofa area in the living room area to a dining table area in the dining room area.

In this case, the house-wide smart host may determine that the user is to move from the sofa area in the living room area to the dining table area in the dining room area, and determine, with reference to the control instruction "turn on the light" in the voice instruction of the user, that the user wants to turn on a light group 4 of the to-be-arrived dining table area. Then, the house-wide smart host may control the light group 4 to be turned on.

Refer to FIG. 9(b). The light group 4 in the sofa area may change from a light-off state to a light-on state under control of the house-wide smart host.

Based on this embodiment of this application, when the user utters the voice instruction "turn on the light" in the moving process, the house-wide smart host may control, to be turned on, a light or light group in an area space at which the user is to arrive, so that even if the voice instruction of the user does not include an indication for an area space, the home device in the area space that the user wants to control may be controlled.

In some embodiments, when a result of the area space indicated by the indication information included in the voice instruction of the user is not unique, the house-wide smart host or the voice receiving device may determine a location of the user, and use an area space of the location of the user as an area space in which a device that needs to be controlled is located. Then, the house-wide smart host or the voice receiving device may control the device in the area space based on the control instruction in the voice instruction of the user.

For a manner in which the house-wide smart host or the voice receiving device may determine the location of the user, refer to the foregoing related descriptions. For brevity, details are not described herein again.

It should be understood that, that the result of the area space indicated by the indication information is not unique may also be understood as that a result indicated by location information included in the voice instruction of the user is not unique.

For example, the user is located in the sofa area in the living room area, and utters the voice instruction "turn on the light on the wall side". The location information in the voice instruction is the "wall side", and the "wall side" indicates a plurality of area spaces (for example, a wall side of the living room or a wall side of the main bedroom). In this case, the house-wide smart host or the voice receiving device may determine that the location of the user is the sofa area in the living room area, and may determine that the light that needs to be turned on is located in the living room area. In this case, the house-wide smart host may control the light on the wall side of the living room area to be turned on.

In this way, when the area space indicated by the voice instruction of the user is not unique, in the technical solution, the area space of the location of the user may be used as the area space in which the device that needs to be controlled is located, so that the home device in the area space that the user wants to control may be controlled.

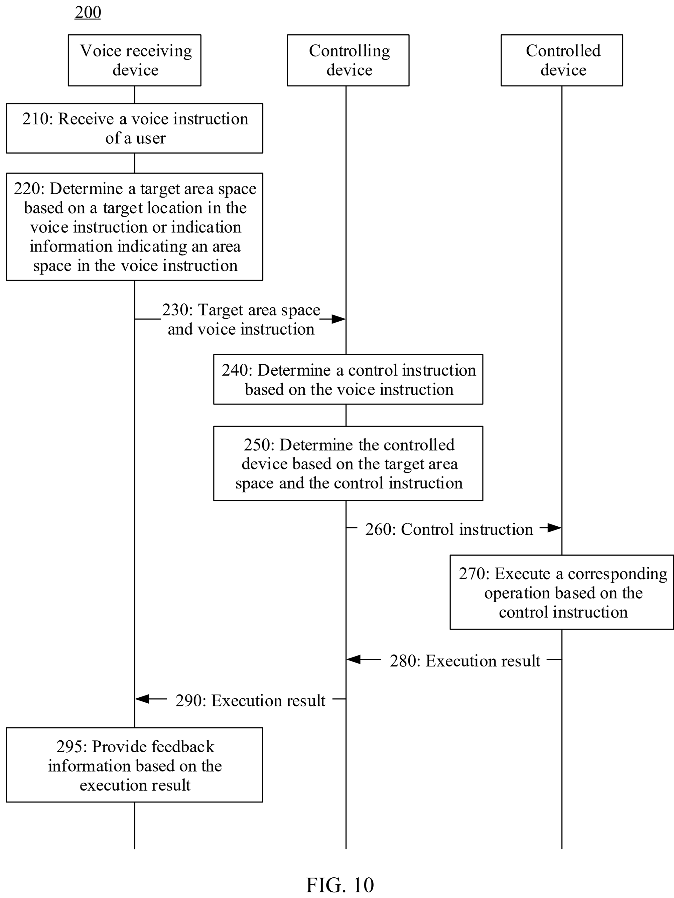

FIG. 10 is a schematic flowchart of a voice interaction-based device control method according to an embodiment of this application. As shown in FIG. 10, the method 200 may include step 210 to step 295.

It should be understood that in this embodiment of this application, a voice receiving device such as a smart speaker or a control panel, a controlling device such as a house-wide smart host or a smart gateway, and a controlled device such as a light or light group are used as an example for description.

In this embodiment of this application, the voice receiving device, the controlling device, and the controlled device may be communicatively connected to each other in a wireless manner, for example, through Wi-Fi, Bluetooth, or ZigBee, or may be communicatively connected to each other in a wired manner, for example, through a power line. Alternatively, the voice receiving device, the controlling device, and the controlled device may log in to a same account or be in a same local area network.

It should be understood that the voice receiving device and the controlling device may alternatively be a same device. This is not limited in this embodiment of this application.

210: The voice receiving device receives a voice instruction of a user.

For example, the voice instruction may be an instruction, such as a light-on instruction, a light-off instruction, an air conditioner-off instruction, or an air conditioner-on instruction, uttered by the user to control a home device.

220: The voice receiving device determines a target area space based on a target location in the voice instruction or indication information indicating an area space in the voice instruction.

For example, if the voice instruction is "turn off the light in the main bedroom", the area space indicated by the indication information is a "main bedroom area", and the voice receiving device may use the main bedroom area as the target area space.

For example, if the voice instruction is "turn on the light here", the target location is "here", and the voice receiving device may use an area space corresponding to a location of the user as the target area space.

230: The voice receiving device sends the target area space and the voice instruction to the controlling device. Correspondingly, the controlling device receives the target area space and the voice instruction.

In some examples, the voice receiving device may further preliminarily process, such as filtering and noise reduction, on the voice instruction, and send the preliminarily processed voice instruction to the controlling device.

It should be understood that step 220 may be further performed by the controlling device. In this case, the voice receiving device may first send the voice instruction to the controlling device, and the voice receiving device does not need to perform step 230.

240: The controlling device determines a control instruction based on the voice instruction.

For example, if the voice instruction is "turn on the light here", the controlling device may determine that the control instruction is "turn on the light".

250: The controlling device determines the controlled device based on the target area space and the control instruction.

Because the controlling device may pre-store an area space corresponding to a home device in an entire house, when obtaining the target area space, the controlling device may determine specific home devices corresponding to the target area space.

For example, when the voice instruction is "turn on the light in the main bedroom", and the control instruction is "turn on the light", the controlling device can determine a light or light group that needs to be controlled in the main bedroom area.

260: The controlling device sends the control instruction to the controlled device. Correspondingly, the controlled device receives the control instruction.

For example, when the voice instruction is "turn on the light here", the control instruction is "turn on the light", and the controlling device may send a "light-on" instruction to the corresponding controlled device (for example, the light or light group).

270: The controlled device executes a corresponding operation based on the control instruction.

When the control instruction is "turn on the light", the controlled device may change from a light-off state to a light-on state based on the "light-on" instruction.

When the control instruction is "turn off the light", the controlled device may change from a light-on state to a light-off state based on the "light-off" instruction.

280: The controlled device sends an execution result to the controlling device. Correspondingly, the controlling device receives the execution result.

After performing the corresponding operation based on the control instruction, the controlled device may send the execution result to the controlling device.

For example, an execution result 1 indicates that the execution succeeds, and an execution result 0 indicates that the execution fails.

For example, after changing from the light-off state to the light-on state based on the "light-on" instruction, the controlled device may feed back the execution result 1 to the controlling device, so that the controlling device can determine whether the controlled device successfully executes the control instruction.

It may be understood that step 280 may not be performed. This is not limited in this embodiment of this application.

290: The controlling device sends the execution result to the voice receiving device. Correspondingly, the voice receiving device receives the execution result.

The controlling device may send the execution result of the controlled device to the voice receiving device, so that the voice receiving device can provide feedback information for the user.

295: The voice receiving device provides the feedback information based on the execution result.

In some examples, the voice receiving device may directly output a feedback based on the execution result. For example, when the execution result is that the execution succeeds, the voice receiving device may directly output, by using a voice, that the execution succeeds.

In some examples, when the execution result is that the execution succeeds, the voice receiving device may further determine, based on the location of the user and an area space, a manner of providing the feedback for the user.

For example, when the location of the user and the area space in which the home device that needs to be controlled is located are in a same area space, the user may immediately obtain a result of executing the voice instruction by the home device. Therefore, the voice receiving device may perform a simplified feedback or not to perform a feedback.

In another example, if the location of the user and the area space in which the home device that needs to be controlled is located are in different area spaces, the user cannot immediately obtain a result of executing the voice instruction by the home device. Therefore, the voice receiving device needs to feed back the execution result in a voice manner.

Based on this embodiment of this application, the voice receiving device may determine, based on the target location and the indication information in the voice instruction of the user, the target area space in which the controlled device is located, and send, to the controlling device, area space information indicating the target area space and the voice instruction. The controlled device may determine the control instruction based on the voice instruction, determine the controlled device based on the control instruction and the target area space, and send the control instruction to the controlled device. The voice receiving device receives the result that is of executing the voice instruction by the controlled device and that is sent by the controlling device, and provides the corresponding feedback information for the user based on the result.

In this way, when the user performs voice interaction with the home device, only a simple voice instruction is required to control a home device in a specific area space that the user wants to control.

It may be understood that a specific execution sequence of the foregoing steps 210 to 290 is not limited in this embodiment of this application. In some examples, some steps in steps 210 to 290 may not be performed or may be replaced with other steps.

In another example, the voice receiving device may further output a feedback based on the indication information of the controlling device. In this case, step 290 may be replaced with the following step:

The controlling device sends the indication information to the voice receiving device based on the execution result.

In some examples, the controlling device may directly send the indication information to the voice receiving device based on the execution result. For example, when the execution result is that the execution succeeds, the controlling device may directly indicate the voice receiving device to output, by using a voice, that the execution succeeds.

In some examples, when the execution result is that the execution succeeds, the controlling device may further determine the indication information based on the location of the user and the area space.

For example, when the location of the user and the area space in which the home device that needs to be controlled is located are in the same area space, the user may immediately obtain the result of executing the voice instruction by the home device. Therefore, the controlling device may indicate the voice receiving device to perform the simplified feedback or not to perform the feedback, for example, in a visual manner such as blinking, or in a prompt sound effect manner.

In another example, if the location of the user and the area space in which the home device that needs to be controlled is located are in different area spaces, the user cannot immediately obtain the result of executing the voice instruction by the home device. Therefore, the controlling device may indicate the voice receiving device to feed back the execution result.

Step 295 may be replaced with the following step:
The voice receiving device provides feedback information based on the indication information.

In this way, the voice receiving device may provide a feedback for the user in different feedback manners based on the indication information output by the controlling device, so that the feedback can be provided to the user in an appropriate manner, thereby improving intelligence of the home device.

In some embodiments, that the voice receiving device determines the target area space based on the target location in the voice instruction includes: determining the location of the user based on the voice instruction; and determining the area space corresponding to the location of the user as the target area space.

Based on this embodiment of this application, if the voice instruction is "turn on the light here", the voice receiving device may determine the location of the user, and determine the area space corresponding to the location of the user as the target area space. In this way, the user does not need to accurately say an area space in which the home device that needs to be controlled is located, and can conveniently control home devices in some area spaces by using only a simple voice instruction, to improve voice interaction efficiency.

In some embodiments, that the voice receiving device determines the target area space based on the target location in the voice instruction includes:
determining that the voice instruction does not include the indication information; and
determining a first area space corresponding to the target location as the target area space, where the first area space includes one or more area subspaces.

For example, the voice instruction is "turn on the light here", and here may correspond to a living room area. The living room area may include a plurality of area subspaces such as a sofa and a television cabinet. In this case, the voice receiving device may use the entire living room area as the target area space.

In this way, the user does not need to accurately say an area space in which the home device that needs to be controlled is located, and can conveniently control home devices in some area spaces by using only a simple voice instruction, to improve voice interaction efficiency.

In some embodiments, that the voice receiving device determines the target area space based on the indication information indicating the area space in the voice instruction includes:
determining that the voice instruction includes the indication information; and
determining the area space indicated by the indication information as the target area space.

For example, if the voice instruction is "turn on the light in the main bedroom", the indication information is the main bedroom, and the main bedroom area may be used as the target area space.

Based on this embodiment of this application, when the voice instruction of the user includes the indication information indicating the area space, the voice receiving device may determine that the target area space is the area space indicated by the indication information. In this way, the voice receiving device can determine needed devices in specific area spaces, to improve voice interaction efficiency.

In some embodiments, that the voice receiving device determines the target area space based on the indication information indicating the area space in the voice instruction includes: determining a target area subspace in a plurality of area subspaces in the area space based on the indication information; and determining the target area subspace as the target area space.

For example, the living room area includes a plurality of area subspaces such as a sofa area, a television cabinet area, and a wall side area. If the voice instruction is "turn on the light in the sofa area", the indication information is the sofa area, and the target area subspace is the sofa area. In this case, the voice receiving device may use the sofa area as the target area space.

Based on this embodiment of this application, the home device in the area space that the user wants to control may be controlled.

In some embodiments, that the voice receiving device determines the target area space based on the indication information indicating the area space in the voice instruction includes:
determining that the indication information indicates a plurality of area spaces;
determining the location of the user; and
determining an area space corresponding to the location of the user as the target area space, where the area space corresponding to the target location is one of the plurality of area spaces.

For example, the location of the user may be determined by the voice receiving device based on the voice instruction, for example, sound source positioning is performed to determine the location of the user, or the location of the user may be received by the voice receiving device from another device, for example, from a camera or from the controlling device.

For example, if the voice instruction is "turn on the light on the wall side", the indication information is the wall side, or location information is the wall side. However, an entire house of the user includes a plurality of area spaces, and each area space may have a wall side. Therefore, the indication information may indicate the plurality of area spaces.

Based on this embodiment of this application, when the indication information in the voice instruction indicates the plurality of area spaces, the voice receiving device may further determine the location of the user, and determine, as the target area space, the area space to which the location of the user belongs. In this way, although the voice instruction of the user is simple, the home device in the area space that the user wants to control may still be controlled.

In some embodiments, that the voice receiving device determines the target area space based on the target location in the voice instruction includes:
determining a movement trajectory of the user based on the voice instruction, where the movement trajectory includes a start point and an end point; and
when a control instruction in the voice instruction is used to turn on the controlled device, determining that the target area space is an area space in which the end point is located; or
when a control instruction in the voice instruction is used to turn off the controlled device, determining that the target area space is an area space in which the start point is located.

For example, refer to related descriptions in FIG. 8(a) and FIG. 8(b) and FIG. 9(a) and FIG. 9(b).

Based on this embodiment of this application, if the user sends the voice instruction in a moving process, even if the voice instruction of the user does not include an indication for an area space, the home device in the area space that the user wants to control may be controlled.

In some embodiments, that the controlling device determines the target voice receiving device includes:
receiving a plurality of corresponding sound signals sent by a plurality of voice receiving devices, where locations of the plurality of voice receiving devices are different;
determining a face orientation of a user based on intensity distribution of the plurality of sound signals at different frequencies; and
determining a voice receiving device within positive and negative first angle ranges in a direction of the face orientation as the target voice receiving device.

For example, one voice receiving device may send a sound signal to the controlling device, and the controlling device may determine the face orientation of the user based on the plurality of sound signals.

For example, a specific value of the first angle range is not limited in this embodiment of this application. For example, the first angle range is 5 degrees or 8 degrees.

Based on this embodiment of this application, the controlling device determines the voice receiving device within the positive and negative first angle ranges in the direction of the face orientation of the user as the target voice receiving device, so that the voice receiving device in a line of sight of the user can provide a feedback for the user, to help the user intuitively obtain a feedback result.

In some embodiments, the method 200 may further include:
when the voice receiving device does not exist within the positive and negative first angle ranges in the direction of the face orientation of the user, determining a voice receiving device closest to the user as the target voice receiving device.

Based on this embodiment of this application, if the voice receiving device does not exist within the positive and negative first angle ranges in the direction of the face orientation of the user, the voice receiving device closest to the user is determined as the target voice receiving device. In this way, when the voice receiving device does not exist in the line of sight of the user, the voice receiving device closest to the user provide a feedback for the user, to help the user obtain a feedback result.

In some embodiments, the method 200 may further include: when a distance between the voice receiving device within the positive and negative first angle ranges in the direction of the face orientation of the user and the user is greater than a first preset distance, determining a voice receiving device closest to the user as the target voice receiving device.

Based on this embodiment of this application, if a distance between a voice receiving device in the line of sight of the user and the user is greater than the first preset distance, the voice receiving device closest to the user is determined as the target voice receiving device that provides a feedback for the user. The technical solution helps the user obtain a feedback result nearby.

In some embodiments, that the controlling device determines the target voice receiving device includes:
when a ratio of distances between two voice receiving devices closest to the user and the user is less than a first ratio, determining the voice receiving device closest to the user as the target voice receiving device.

The technical solution helps the user obtain a feedback result nearby.

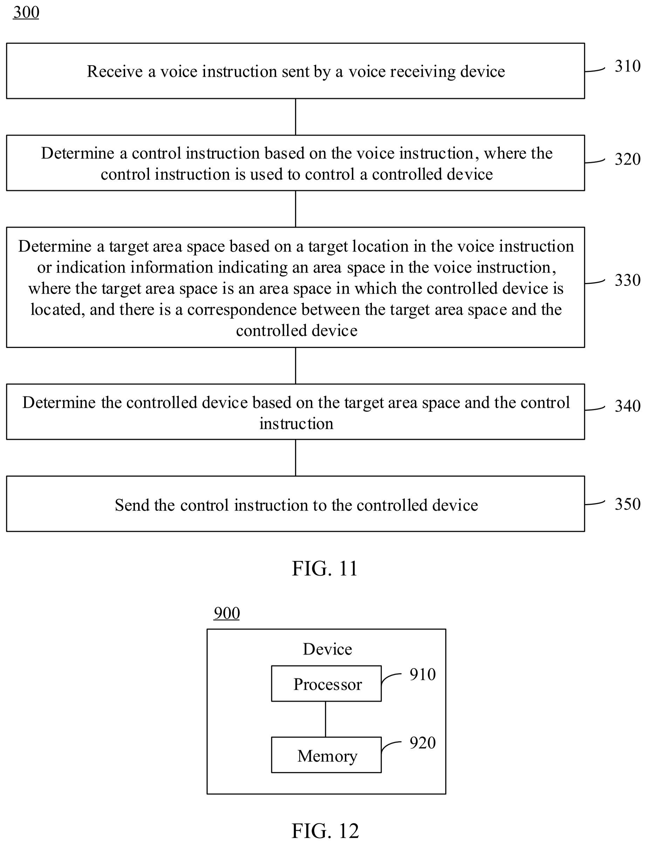

FIG. 11 shows a voice interaction-based device control method according to an embodiment of this application. The method 300 is applied to a controlling device, and the method 300 includes steps 310 to 350.

310: Receive a voice instruction sent by a voice receiving device.

For the step, refer to the related descriptions of step 210 above.

320: Determine a control instruction based on the voice instruction, where the control instruction is used to control a controlled device.

It should be understood that, for step 320, refer to the related descriptions of step 240 above.

330: Determine a target area space based on a target location in the voice instruction or indication information indicating an area space in the voice instruction, where the target area space is an area space in which the controlled device is located, and there is a correspondence between the target area space and the controlled device.

It should be understood that, for the technical solution in which the controlling device determines the target area space based on the target location in the voice instruction or the indication information indicating the area space in the voice instruction, refer to the descriptions of the plurality of technical solutions in the method 200 in which the voice receiving device determines the target area space. For brevity, details are not described herein again.

340: Determine the controlled device based on the target area space and the control instruction.

It should be understood that, for step 340, refer to the related descriptions of step 250 above.

350: Send the control instruction to the controlled device.

Based on this embodiment of this application, the controlling device may receive the voice instruction sent by the voice receiving device, determine the control instruction for controlling the controlled device and the target area space, determine the controlled device based on the target area space and the control instruction, and send the control instruction to the controlled device, to control the controlled device to execute an instruction of the user.

In this way, when the user performs voice interaction with a home device, a home device in a specific area space that the user wants to control can be controlled by using a simple voice instruction.

In some embodiments, that the controlling device determines the target area space based on the target location in the voice instruction includes:
determining an area space corresponding to the target location as the target area space.

In this way, the user does not need to accurately say an area space in which the home device that needs to be controlled is located, and can conveniently control home devices in some area spaces by using only a simple voice instruction, to improve voice interaction efficiency.

In some embodiments, that the controlling device determines the target area space based on the indication information indicating the area space in the voice instruction includes:
determining that the voice instruction includes the indication information; and
determining the area space indicated by the indication information as the target area space.

Based on this embodiment of this application, when the voice instruction of the user includes the indication information indicating the area space, the voice receiving device may determine that the target area space is the area space indicated by the indication information. In this way, the voice receiving device can determine needed devices in specific area spaces, to improve voice interaction efficiency.

In some embodiments, the method 300 further includes:
receiving an execution result sent by the controlled device;
determining a target voice receiving device; and
sending the execution result to the target voice receiving device.

Based on this embodiment of this application, the controlling device may further receive the execution result sent by the controlled device, and send the execution result to the target voice receiving device, so that the target voice receiving device provides feedback information for the user.

In some embodiments, that the controlling device determines the target voice receiving device includes:
receiving a plurality of corresponding sound signals sent by a plurality of voice receiving devices, where locations of the plurality of voice receiving devices are different;
determining a face orientation of a user based on intensity distribution of the plurality of sound signals at different frequencies; and
determining a voice receiving device within positive and negative first angle ranges in a direction of the face orientation as the target voice receiving device.

Based on this embodiment of this application, the controlling device determines the voice receiving device within the positive and negative first angle ranges in the direction of the face orientation of the user as the target voice receiving device, so that the voice receiving device in a line of sight of the user can provide a feedback for the user, to help the user intuitively obtain a feedback result.

In some embodiments, the method 300 further includes:
when the voice receiving device does not exist within the positive and negative first angle ranges in the direction of the face orientation, determining a voice receiving device closest to the user as the target voice receiving device.

Based on this embodiment of this application, if the voice receiving device does not exist within the positive and negative first angle ranges in the direction of the face orientation of the user, the voice receiving device closest to the user is determined as the target voice receiving device. In this way, when the voice receiving device does not exist in the line of sight of the user, the voice receiving device closest to the user provide a feedback for the user, to help the user obtain a feedback result.

An embodiment of this application further provides a voice interaction-based device control method. The method may be applied to a voice receiving device, and the method includes:

The voice receiving device receives a voice instruction of a user.

The voice receiving device determines a control instruction based on the voice instruction, where the control instruction is used to control a controlled device.

The voice receiving device determines a target area space based on a target location in the voice instruction or indication information indicating an area space in the voice instruction, where the target area space is an area space in which the controlled device is located, and there is a correspondence between the target area space and the controlled device.

The voice receiving device determines the controlled device based on the target area space and the control instruction.

The voice receiving device sends the control instruction to the controlled device.

The voice receiving device receives a result of executing the control instruction by the controlled device.

The voice receiving device outputs a feedback based on the execution result.

Based on this embodiment of this application, the voice receiving device may receive the voice instruction of the user, process the voice instruction, control the controlled device to perform a corresponding operation, and output the feedback to the user based on the result of executing the control instruction by the controlled device.

In this way, when the user performs voice interaction with a home device, a home device in a specific area space that the user wants to control can be controlled by using a simple voice instruction.

In another example, the voice receiving device may further convert the voice instruction of the user into text information, and send the text information to another device (such as a smart host or a server). The another device analyzes the text information, and controls the controlled device to perform a corresponding operation. This is not limited in this embodiment of this application.

FIG. 12 is a block diagram of a device according to an embodiment of this application. As shown in FIG. 11, the device 900 may include one or more processors 910 and one or more memories 920. The one or more memories 920 store one or more instructions. When the instructions are executed by the one or more processors 910, the voice interaction-based device control method in any one of the foregoing possible implementations is performed.

For example, the device 900 may be a house-wide smart host, a voice receiving device, a server, a cloud server, or the like.

In some examples, the device 900 may alternatively be a mobile phone or a tablet. It should be understood that the mobile phone or the tablet may be further configured to receive a voice instruction of a user, and perform the voice interaction-based device control method in any one of the foregoing possible implementations. Alternatively, the mobile phone or the tablet may be further configured to receive a voice instruction sent by a voice receiving device, and process the voice instruction, to control a corresponding home device. Alternatively, the mobile phone or the tablet may further provide feedback information or the like for the user.

An embodiment of this application further provides an apparatus, including a processor and a communication interface. The communication interface is configured to receive a signal, and transmit the signal to the processor. The processor processes the signal, so that the voice interaction-based device control method in any one of the foregoing possible implementations is performed.

The apparatus may be a chip. For example, the chip may be a chip system or an independent chip.

An embodiment of this application further provides a readable storage medium. The readable storage medium stores instructions. When the instructions are run on a device, the device is enabled to perform the foregoing related method steps, to implement the voice interaction-based device control method in the foregoing embodiments.

An embodiment of this application further provides a program product. When the program product runs on a device, the device is enabled to perform the foregoing related steps, to implement the voice interaction-based device control method in the foregoing embodiments.

An embodiment of this application further provides a voice interaction apparatus, including a module configured to implement the voice interaction-based device control method in any one of the foregoing embodiments.

In addition, an embodiment of this application further provides an apparatus. The apparatus may be specifically a chip, a component, or a module, and the apparatus may include a processor and a memory that are connected. The memory is configured to store instructions. When the apparatus runs, the processor may execute the instructions stored in the memory, so that the apparatus performs the voice interaction-based device control method in the foregoing method embodiments.

The device, the readable storage medium, the program product, or the apparatus provided in embodiments is configured to perform the corresponding method provided above. Therefore, for beneficial effects that can be achieved, refer to the beneficial effects of the corresponding method provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, multiple units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A voice interaction-based device control method, wherein the method is applied to a voice receiving device, and the method comprises:
receiving a voice instruction of a user;
determining a target area space based on a target location in the voice instruction or indication information indicating an area space in the voice instruction, wherein the target area space is an area space in which a controlled device is located, and there is a correspondence between the target area space and the controlled device;
sending, to a controlling device, area space information indicating the target area space and the voice instruction;
receiving an execution result sent by the controlling device, wherein the execution result is a result of executing the voice instruction by the controlled device; and
providing feedback information based on the execution result.

2. The method according to claim 1, wherein the providing the feedback information based on the execution result comprises:
when a location of the user and the controlled device are in a same area space, providing the feedback information based on the execution result in a visual manner and/or a prompt sound effect manner; or
when a location of the user and the controlled device are in different area spaces, providing the feedback information based on the execution result in a manner of indicating the execution result by using a voice instruction.

3. The method according to claim 1 or 2, wherein the determining the target area space based on the target location in the voice instruction comprises:
determining that the voice instruction does not comprise the indication information; and
determining a first area space corresponding to the target location as the target area space, wherein the first area space comprises one or more area subspaces.

4. The method according to claim 1 or 2, wherein the determining the target area space based on the indication information indicating the area space in the voice instruction comprises:
determining that the voice instruction comprises the indication information; and
determining the area space indicated by the indication information as the target area space.

5. The method according to claim 4, wherein the determining the target area space based on the indication information indicating the area space in the voice instruction comprises:
determining a target area subspace in a plurality of area subspaces in the area space based on the indication information; and
determining the target area subspace as the target area space.

6. The method according to claim 1 or 2, wherein the determining the target area space based on the indication information indicating the area space in the voice instruction comprises:
determining that the indication information indicates a plurality of area spaces;
determining the location of the user; and
determining an area space corresponding to the location of the user as the target area space, wherein an area space corresponding to the target location is one of the plurality of area spaces.

7. The method according to claim 1 or 2, wherein the determining the target area space based on the target location in the voice instruction comprises:
determining a movement trajectory of the user based on the voice instruction, wherein the movement trajectory comprises a start point and an end point; and
when a control instruction in the voice instruction is used to turn on the controlled device, determining that the target area space is an area space in which the end point is located; or
when a control instruction in the voice instruction is used to turn off the controlled device, determining that the target area space is an area space in which the start point is located.

8. A voice interaction-based device control method, wherein the method is applied to a controlling device, and the method comprises:
receiving area space information and a voice instruction that are sent by a voice receiving device, wherein the voice instruction is a voice instruction received by the voice receiving device, the area space information indicates a target area space, and there is a correspondence between the target area space and the controlled device;
determining a control instruction based on the voice instruction, wherein the control instruction is used to control the controlled device in the target area space;
determining, based on the target area space and the control instruction, the controlled device that needs to be controlled; and
sending the control instruction to the controlled device.

9. The method according to claim 8, wherein the method further comprises:
receiving an execution result sent by the controlled device; and
sending the execution result to a target voice receiving device, or sending, to a target voice receiving device, indication information used to provide feedback information.

10. The method according to claim 9, wherein the sending the execution result to the target voice receiving device comprises:
determining the target voice receiving device; and
sending the execution result to the target voice receiving device.

11. The method according to claim 10, wherein the determining the target voice receiving device comprises:
receiving a plurality of corresponding sound signals sent by a plurality of voice receiving devices, wherein locations of the plurality of voice receiving devices are different;
determining a face orientation of a user based on intensity distribution of the plurality of sound signals at different frequencies; and
determining a voice receiving device within positive and negative first angle ranges in a direction of the face orientation as the target voice receiving device.

12. The method according to claim 11, wherein the method further comprises:
when the voice receiving device does not exist within the positive and negative first angle ranges in the direction of the face orientation of the user, determining a voice receiving device closest to the user as the target voice receiving device.

13. The method according to claim 11, wherein the method further comprises:
when a distance between the voice receiving device within the positive and negative first angle ranges in the direction of the face orientation of the user and the user is greater than a first preset distance, determining a voice receiving device closest to the user as the target voice receiving device.

14. The method according to claim 10, wherein the determining the target voice receiving device comprises:
when a ratio of distances between two voice receiving devices closest to the user and the user is less than a first ratio, determining the voice receiving device closest to the user as the target voice receiving device.

15. The method according to any one of claims 9 to 14, wherein the sending, to the target voice receiving device, the indication information used to provide the feedback information comprises:
when a location of the user and the controlled device are in a same area space, determining the indication information based on the execution result, wherein the indication information indicates the target voice receiving device to provide the feedback information in a visual effect manner and/or a prompt sound effect manner; and
sending the indication information to the target voice receiving device; or
when a location of the user and the controlled device are in different area spaces, determining the indication information based on the execution result, wherein the indication information indicates the target voice receiving device to provide the feedback information in a manner of indicating the execution result by using a voice instruction.

16. A voice interaction-based device control method, wherein the method is applied to a controlling device, and the method comprises:
receiving a voice instruction sent by a voice receiving device;
determining a control instruction based on the voice instruction, wherein the control instruction is used to control a controlled device;
determining a target area space based on a target location in the voice instruction or indication information indicating an area space in the voice instruction, wherein the target area space is an area space in which the controlled device is located, and there is a correspondence between the target area space and the controlled device;
determining the controlled device based on the target area space and the control instruction; and
sending the control instruction to the controlled device.

17. The method according to claim 16, wherein the determining the target area space based on the indication information indicating the area space in the voice instruction comprises:
determining that the voice instruction comprises the indication information; and
determining the area space indicated by the indication information as the target area space.

18. The method according to claim 16 or 17, wherein the method further comprises:
receiving an execution result sent by the controlled device;
determining a target voice receiving device; and
sending the execution result to the target voice receiving device.

19. The method according to claim 18, wherein the determining the target voice receiving device comprises:
receiving a plurality of corresponding sound signals sent by a plurality of voice receiving devices, wherein locations of the plurality of voice receiving devices are different;
determining a face orientation of a user based on intensity distribution of the plurality of sound signals at different frequencies; and
determining a voice receiving device within positive and negative first angle ranges in a direction of the face orientation as the target voice receiving device.

20. The method according to claim 19, wherein the method further comprises:
when the voice receiving device does not exist within the positive and negative first angle ranges in the direction of the face orientation, determining a voice receiving device closest to the user as the target voice receiving device.

21. A voice receiving device, comprising one or more processors and one or more memories, wherein the one or more memories store one or more programs, and when the one or more programs are executed by the one or more processors, the voice interaction-based device control method according to any one of claims 1 to 7 is performed.

22. A controlling device, comprising one or more processors and one or more memories, wherein the one or more memories store one or more programs, and when the one or more programs are executed by the one or more processors, the voice interaction-based device control method according to any one of claims 8 to 20 is performed.

23. A readable storage medium, wherein the readable storage medium stores instructions, and when the instructions are run on a device, the voice interaction-based device control method according to any one of claims 1 to 20 is performed.

24. A program product, wherein the program product comprises program code, and when the program code is run on a device, the voice interaction-based device control method according to any one of claims 1 to 20 is performed.
